# EUROPEAN PATENT SPECIFICATION

(11) **EP 2 756 041 B1**
(45) Date of publication and mention of the grant of the patent: **04.03.2015**
(21) Application number: 12832257.5
(22) Date of filing: 30.08.2012
(51) Int. Cl.: C09B 69/10, C09B 23/10

(54) **ORGANIC ELECTROCHROMIC MATERIALS HAVING HIGH TRANSPARENCY AND HIGH CONTRAST IN THE VISIBLE RANGE**
ORGANISCHE ELEKTROCHROME MATERIALIEN MIT HOHER TRANSPARENZ UND HOHEM KONTRAST IM SICHTBAREN BEREICH
MATÉRIAUX ÉLECTRO-CHROMIQUES ORGANIQUES PRÉSENTANT UNE GRANDE TRANSPARENCE ET UN CONTRASTE ÉLEVÉ DANS LE VISIBLE

(30) Priority: 15.09.2011 IT TO20110830
(43) Date of publication of application: 23.07.2014
(73) Proprietor: Consorzio Interuniversitario Nazionale per la Scienza e Tecnologia dei Materiali (INSTM), 50121 Firenze (IT); Università degli Studi di Milano - Bicocca, 20126 Milano (IT)
(72) Inventor: PAGANI, Giorgio, A., I-20100 Milano (MI) (IT); BEVERINA, Luca, I-20100 Milano (MI) (IT); SASSI, Mauro, I-21040 Vedano Olona (VA) (IT); SALAMONE, Matteo, Marco, I-20861 Brugherio (MB) (IT); MARI, Claudio, Maria, I-20123 Milano (MI) (IT); RUFFO, Riccardo, I-20099 Bresso (MI) (IT)
(74) Representative: Zelioli, Giovanni
(86) International application number: PCT/IB2012/001687
(87) International publication number: WO 2013/038243

(56) References cited:
- EP-A1- 1 928 000
- WO-A1-2004/092820
- WO-A1-2009/120658
- WO-A2-2005/034070
- US-A1- 2004 189 187
- US-A1- 2008 020 208
- CZARDYBON A ET AL: "Synthesis, Electrochemical and Spectroelectrochemical Properties of Viologen Derivative of PEDOT", POLISH JOURNAL OF CHEMISTRY, POLSKIE TOWARZYSTWO CHEMICZNE, PL, vol. 78, 31 July 2004 (2004-07-31), pages 1533-1541, XP008154613, ISSN: 0137-5083

## Description

### [TECHNICAL FIELD]

The present invention relates to the field of conducting organic materials having electrochromic characteristics.

In particular, the present invention relates to electrochemical, electrical and optical synthesis and characterization of conducting organic materials showing electrochromic behaviour.

More in particular, the invention relates to a class of organic materials characterized by co-presence of an electrochemical polymer and a molecule having a defined molecular weight, the latter being also electrochromic and being chemically bound to or dispersed in the polymer.

### [PRIOR ART]

Electrochromic materials are used in applications that exploit their colour variation, obtained through electrically controlled oxidation/reduction. Said colour variation is reversible, and typically occurs between a transparent and colourless state and a coloured state (various colours).

Organic materials with electrochromic behaviour can be divided into two classes: polymeric materials (conducting polymers) and electrochromic monodisperse molecular materials (the most common of which belong to the class of viologenes).

The present invention relates to an evolution of polymer-based materials, a general description of which can be found in: (T.A. Skotheim, R.L. Elsenbaumer, J.R. Reynolds, Handbook of Conducting Polymers, (third ed.); Marcel Dekker, New York, 1986).

### Polymeric materials.

Since they were first discovered, intrinsically conducting polymeric materials have arisen great technologic interest due to their capability of conjugating properties which are typical of plastic materials (easiness of working, very good mechanical properties, compatibility with other plastic materials, low cost, and simple modulation of their functional properties) with other properties which are typical of conducting materials (electric transport property) and semiconductors (conductivity modulation, electroluminescence). In this type of materials, conductivity modulation comes from the fact that they can be partially reduced (generally defined as n-type doping) and/or oxidized (generally defined as p-type doping). The charges formed by the specified electrochemical process cause formation of anionic delocalized carriers (for n-type doping) or cationic delocalized carriers (for p-type doping), which can move more or less freely both along the π-conjugated system of the polymeric chains and by hopping between chains. Suitable counterions ensure electroneutrality. A description of these phenomena can be found in: (S. Sadki, P. Schottland, N. Brodie, G. Sabouraud Chem. Soc. Rev. 2000, 29, 283).

In principle, all intrinsically conducting polymeric materials may show electrochromic behaviour, i.e. they may have a different colour depending on their oxidation state. The doping process and the resulting formation of delocalized carriers in the material, in fact, also modifies the optical transitions allowed. As a consequence, an important field of application for these materials is represented by electrochromic devices, i.e. devices which can adjust the intensity of the transmitted light by means of an external electric control. In its simplest configuration, an electrochromic device consists of three layers: two complementary electrodes (deposited on a metal-type or oxide-type conducting material) intercalated by a suitable electrolyte. A description of these phenomena can be found in: (D.R. Rosseinski, R. J. Mortimer Adv. Mater. 2001, 13, 783).

For applications that require a variation of the device's transmissivity from a highly transmissive state (transparent and colourless) to a coloured state, the two complementary electrodes are so selected as to show opposite electrochromic behaviour: one electrode is coloured by oxidation (anodic material), the other is coloured by reduction (cathodic material). Since the electrochromic behaviour of the two electrodes is complementary, it is possible to obtain high contrast between the transmissive state and the coloured state.

The best-known electrochromic polymeric material is called "PEDOT", which stands for Poly-(3,4-ethylenedioxythiophene), a cathodic material capable of switching from an intense blue coloured state to a transmissive state having a feeble light blue colour. Although PEDOT possesses high environmental stability (which is especially significant when it is in oxidized form) and is available, through different procedures, in the form of a homogeneous film having optical quality compatible with ophthalmic applications, (deposition from pre-polymerized dispersion, electropolymerization, *in situ* oxidative chemical polymerization) but having incompatible colouristic quality, its residual colour in the transmissive state makes it incompatible with all those applications that require absolute colourlessness. In addition, the characteristic blue colour of the reduced state is not acceptable for ophthalmic applications.

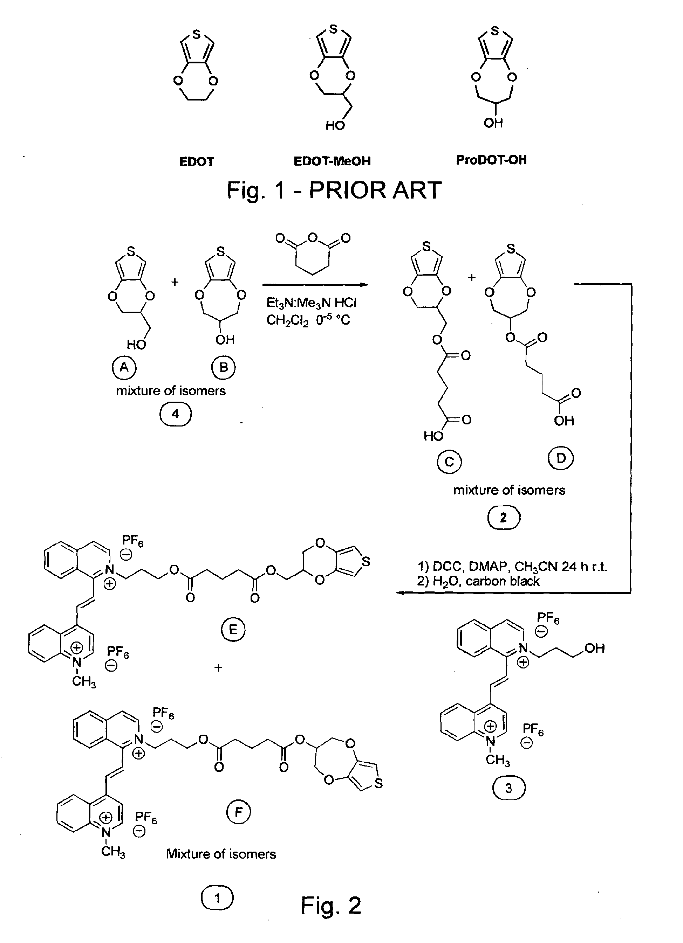

The derivative most commonly employed for functionalizing the EDOT monomer is the so-called EDOT-MeOH (available on the market as "Baytron® M-OH"). This product is actually an approx. 9:1 mixture of EDOT-MeOH and ProDOT-OH, as shown in Figure 1.

The optoelectronic properties of films polymerized *in situ* starting from Baytron®-M-OH are comparable to those of non-functionalized PEDOT. However, this new monomer is more soluble in water and can be further functionalized through alcoholic termination. Films of PEDOT-MeOH have been used as active materials in supercapacitors, as described in the following document: (U. Merker, K. Reuter, K. Lerch US 2005/0085711 A1, 2004).

Suitable functionalization derivatives of PEDOT-MeOH, obtained through alkylation or esterification with long alkylic chains of the Baytron® M-OH monomer and subsequent *in situ* oxidative polymerization, have demonstrated the possibility of obtaining completely colourless films in the oxidized state, as described in patent application WO2008064878A1, entitled "Highly Transparent Electrochromic Coating Material, Method for Producing the Same and Use of the Material", by inventors: (Celik, Ayse; Posset, Uwe; Schottner, Gerhard; Pagani, Giorgio; Ruffo, Riccardo; Beverina, Luca; Mari, Claudio Maria; Patriarca, Giorgio; Abbotto, Alessandro). Said films, however, still remain intensely blue-coloured in the reduced state.

The optical absorption (and hence the colour) and the intrinsic conductivity of a conducting polymer can be controlled by introducing electron-donor or electron-acceptor substituents directly on the polymer's conjugated structure, as described, for example, in document (G. Pagani, A. Berlin, A. Canavesi, G. Schiavon, S. Zecchin, G. Zotti Adv. Mater. 8, 1996, 819) and in references cited therein. Any perturbation on the structure of the polymer in its neutral state will also affect the optical absorption of the corresponding oxidized state (for cathodic polymers) or reduced state (for anodic polymers). Notwithstanding the very large number of polymers having the most diverse structures of the repeating unit, no known electrochromic polymer can at the same time provide a highly transmissive state lacking any residual colour and a coloured state having a colour other than blue.

For a further description of electrochromic polymeric materials, see: (P. M. Beaujuge, J. R. Reynolds Chem. Rev. 2010, 110, 268-320 and cited references, J. Roncali Macromol. Rapid Commun. 2007, 28, 1761-1775).

### Molecular materials.

Molecules with reversible redox centres can show an electrochromic behaviour similar to the one described above in regard to polymers. In this case as well, it is useful to distinguish between molecules showing cathodic electrochromic behaviour (the system gets coloured when reduced) and molecules showing anodic electrochromic behaviour (the molecule gets coloured when oxidized). The best-known molecular electrochromic derivatives are viologens, i.e. salts of 4,4'-dialkylpyridinium, which, following monoelectronic reduction, go from a completely colourless dicationic state to an intensely blue-coloured radical cationic state, as described in the following document: (P. M. S. Monk The Viologens: Physicochemical Properties, Synthesis and Applications of the Salts of 4,4'-Bipyridine Whiley and Sons 1998).

The company Gentex® has been selling for several years electrochromic devices based on chromogenic systems belonging to the class of viologens. More in general, dicationic derivatives formed by two azinium salts connected by conjugated bridges of various nature are known as Weitz-type electrochromic derivatives. In these systems, the reduction of the two redox cationic centres may occur either at different potentials (thus causing viologenic behaviour) or simultaneously. In the case of simultaneous reduction, derivatives can be obtained whose electrochromic behaviour involves the switching from a completely colourless transmissive state to an intensely coloured state, distinct from the typical blue of both violegens and PEDOT.

The document CZARDYBON A ET AL: "Synthesis, Electrochemical and Spectroelectrochemical Properties of Viologen Derivative of PEDOT", POLISH JOURNAL OF CHEMISTRY, POLSKIE TOWARZYSTWO CHEMICZNE, PL, vol. 78, 1 January 2004 (2004-01-01), pages 1533-1541, XP008154613, ISSN: 0137-5083, relates to Poly(3,4-ethylenedioxythiophene) (PEDOT), a highly conductive, low band gap (1.6 eV) polymer. The above document discloses that in the oxidized state, thin films of PEDOT are stable and nearly transparent. A derivative of EDOT is presented, a compound 1-methyl-1'(6-(2,3-dihydrothieno[3,4-b][1,4]-dioxine-2-yl-methoxy)-hexyl)-4,4'-bipyridylium bis (hexafluorophosphorane). During electro-polymerization it forms a polymer combining good electrochemical and electrical properties of PEDOT with redox and electrochromic properties of viologen. The monomer is also copolymerized with EDOT. The stability of these polymers is examined using cyclic voltammetry (CV). The CV curves of the thin films of PEDOTM-C⁶-V₂₊2PF₋⁶ and the copolymer obtained in the solution of the pure electrolyte prove the existence of the characteristic, reversible redox system at -0.50 V that is assigned to the viologen radical cation.

Patent application WO2004/092820A1 entitled "Hybrid organic-inorganic material with non-linear optical response based on organic chromophores and process for the preparation thereof" by inventors: (Abbotto Alessandro; Beverina Luca; Pagani Giorgio; Brusatin Giovanna; Innocenzi Plinio; Casalboni Mauro) relates to a hybrid organic inorganic material with non-linear optic response, comprising a cross linked matrix hosting at least one organic chromophore which may be dipole-oriented using electric fields, comprises an effective amount of compounds having general formula (III) where S e S1 are independently selected from the group consisting of H, lower alkyl, aryl, and S2 is a linear or branched alkyl chain comprising from 1 to 18 carbon atoms and at least one hydroxyl group.

None of the above-mentioned systems allows the achievement of an absorption extended to most of the visible range. Such an absorption, which is particularly required for the applications taken into consideration herein, produces a neutral colour (brown or gray).

For a detailed description of Weitz-type electrochromic derivatives, see: (S. Hunig, H. Berneth Topics in Current Chemistry, 1980, Volume 92/1980, 1-44).

Besides the class of viologens and Weitz-type derivatives, there are also many other examples of molecular electrochromic materials. Among the most common cathodic molecular derivatives, it is worth mentioning diarylamines, wherein the two amminic groups are conjugated with each other. These cathodic systems have been incorporated into a variety of polyamidic and polyimidic structural polymers used for the preparation of electrochromic devices, as described in the following document: (G-S. Liou, C-W. Chang Macromolecules, 2008,41, 1667-1674).

It is also worth mentioning, among cathodic molecular materials, a series of monodisperse systems structurally correlated with cathodic conducting polymers. An important example of this class of materials is represented by EDOT-based oligomers having a defined molecular weight and acrylic terminal functionalities. These materials can be converted into reticulated polymers, directly on the working electrode of the device, through photochemical processes, as described in the following document: (C.B. Nielsen, A. Angerhofer, K.A. Abboud, J. R. Reynolds J. Am. Chem. Soc., 2008, 130 (30), pp 9734-9746).

Also in the above case, no materials have ever been described which can show a neutral colour in the coloured state together with complete absence of colour in the highly transmissive state.

### Complex multichromophoric electrochromic materials.

In complex multichromophoric electrochromic materials, a polymeric electrochromic material is coupled to a monodisperse molecular one. The polymeric material acts as a chromogenic system, while at the same time having the mechanical and electrical properties of conducting polymeric systems; the monodisperse system contributes to the definition of the contrast.

The combination of the properties of PEDOT with those of the simplest viologen (a salt of 4,4'-bipyridinium) has led to obtain a material having higher contrast and colouring effectiveness than the individual components, as described in the following document: (Lee et al., Adv. Mat. , 2004, 19, 1713).

Also in the case summarized above, however, the coloured state is intensely blue and the transmissive state is not completely colourless.

The same strategy has been extended to an EDOT-dialkoxibenzene alternating polymer, wherein one of the two alkoxidic derivations is terminated with a viologen, as described in document: (H.C. Ko, S. Kim, H. Lee, B. Moon Avd. Funct. Mater. 2005, 15, 905-909). In this second case there is a significant contrast increase, but neither a colourless transmissive state nor a neutral coloured state can be obtained.

The basic structure of PEDOT has been functionalized with a variety of electron-poor molecular derivatives, among which: anthraquinones, perylene bisimides and tetracyanoanthraquinodimethane. None of these polymers has been developed for applications in electrochromic devices, but the reported spectroelectrochemical characterizations clearly indicate that none of these systems possesses both a colourless transmissive state and a coloured state of neutral colour, as described in the following document: (J. L. Segura, R. Gomez, R. Blanco, E. Reinold, P. Bauerle Chem. Mater. 2006, 18, 2834-2847).

In particular, the same anthraquinonic derivative has been functionalized with a glycolic chain, subjected to electrochemical polymerization, and tested with repeated cyclic voltammetries, thereby highlighting poor process reversibility, as described in the following document: (J. Arias-Pardilla, T.F. Otero, R. Blanco, J.L. Segura Electrochimica Acta 55 (2010) 1535-1542).

All multichromophoric systems discussed so far have the common characteristic of incorporating a monodisperse chromogenic species whose coloured oxidized state is a radical. In particular: radical cationic in the case of viologens, and radical anionic in the case of anthraquinones and bisimide derivatives.

Indeed, the presence of said species may represent an obstacle to obtaining materials that remain stable for long periods in room conditions.

### [OBJECTS AND SUMMARY OF THE INVENTION]

The present invention falls within the field of the above-described multichromophoric electrochromic materials.

The present invention aims at improving some electrochromic characteristics of polymeric materials.

Therefore, the present invention will provide multichromophoric electrochromic materials having: a) a specific nature of the bridge that covalently connects two chromogenic units; b) a specific conducting polymer and a specific monodisperse chromogenic unit without any redox states having radical character.

The present invention proposes an original electrochromic material characterized by co-presence of an electrochromic polymer obtained by polymerization of monomers.

Said monomers are of general formula (I) and/or (II), typically in a mixture having a molar ratio I : II equal to M : (100-M), wherein M varies between 60 and 99.

In said general formula (I) and/or (II), the groups A and B, independently of each other, are functional groups selected among the following: -C=O, -C=S, -O(C=O), -O(C=S), - O(C=O)O, -(C=O)O, -(C=S)O, -(C=S)S, -(C=O)N, -(C=S)N, -SO, -SO₂, or, alternatively, any linear or branched alkylic chain or a glycolic chain. For example, A is a functional group which may be -C=O, -C=S, (C=O)O-, (C=S)O-, -(C=S)S, -(C=O)N,-(C=S)N, -SO, -SO₂, any linear or branched alkylic chain or a glycolic chain; for example, B is a functional group which may be -O(C=O)O-, -(C=O) O-, -(C=S)O-,-(C=S)S-, -(C=O)N-, -(C=S)N-, -SO-, -SO₂-, any linear or branched alkylic chain or a glycolic chain. A and B may be independent of each other, i.e. equal to or different from each other.

R and R' are linear or branched alkylic chains or glycolic chains. In both cases, the number of atoms of carbon typically comprised in R or R' is between 1 and 16. R and R' may be independent of each other, i.e. equal or different.

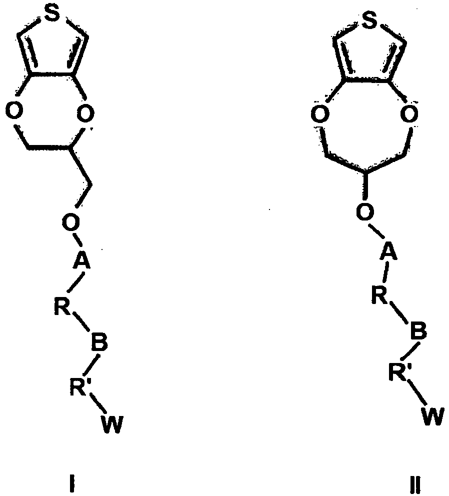

W is a monodisperse electrochromic derivative of general formula (III).

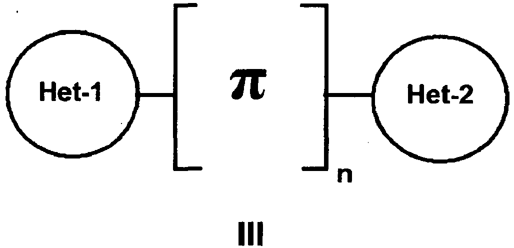

Wherein Het-1 and Het-2 may be equal to or different from each other, and are selected among the following heterocyclic groups: 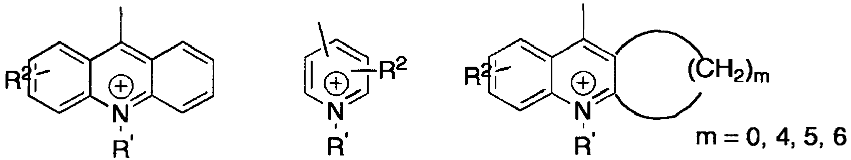 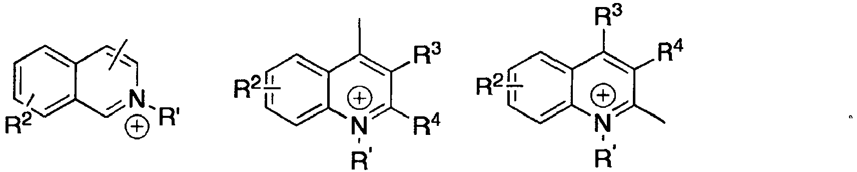 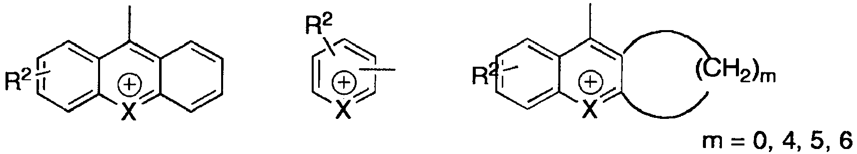 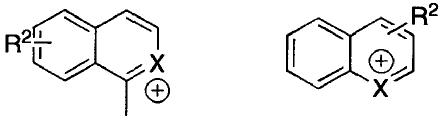 wherein X may be O, S, Se; and wherein R' is defined as above; whereas R², R³ and R⁴ are substituents including, without being limited to, the following: H, methyl, branched or linear alkylic chain, halogens, esters and amides, alkylic and arylic nitriles, nitro derivatives, sulfones and sulfoxides, perfluoroalkyl, alcoxies, dialkylamino, diarylamino, phenyl, 1-naphthyl, 2-naphthyl.

The reference π of formula (III) indicates a conjugated bridge, which may be a double bond, a triple bond, or a plurality of double or triple bonds conjugated in a number of 2 or 3, e.g. a benzenic ring or a thiophenic ring.

The composition of a polymer according to the invention is obtained through polymerization of a mixture of compunds in accordance with the formulae (I) and (II), in the specified ratios. Said polymerization can be done either chemically or electrochemically.

Electrochromic materials are also proposed which are obtained by homopolymerization of (I) and/or (II) as pure components.

The polymerization process can be conducted in the presence of additives/emulsifiers, such as, for example (without being limited to): polyethylene glycoles or polypropylene glycoles, ionic liquids and other ionic and non-ionic surfactants.

The use of electrochromic polymers according to the present invention is also proposed for manufacturing goods.

The present invention, in fact, allows creating composite electrochromic materials, which include a polymeric layer capable of showing both a completely colourless transmissive state and a neutral coloured state (e.g. gray or brown).

The present invention can therefore be advantageously used in many fields, including, without being limited to, ophthalmics (electrochromic lenses), energy-saving solutions for the building industry (smart windows), domotics (refrigerators and ovens fitted with electrochromic doors), automotive (electrochromic windows, windshields, sunroofs and rear-view mirrors) and aeronautics (electrochromic windows for aircraft cabin and cockpits).

The present invention provides monomers and mixtures thereof, polymers, the use of monomers for polymerization, the use of polymers for manufacturing goods, and related panels and ophthalmic lenses having the features set out in the appended claims, which are intended to be an integral part of the present description.

### [BRIEF DESCRIPTION OF THE DRAWINGS]

The invention will now be described more in detail by referring to the synthesis and polymerization of a preferred mixture of compounds hereafter indicated by the formula (1), taken from the general formulae (I) and (II), by means of a few explanatory examples which do not however limit the scope of the invention.

The detailed description will refer to the following figures, which exemplify in a non-limiting manner particular aspects of the present invention. In particular:
- Figure 1 shows the compounds EDOT, EDOT-MeOH and ProDOT-OH;
- Figure 2 shows a detailed synthetic procedure for a polymerogenic mixture.
- Figure 3 shows a detailed synthetic procedure for a derivative.
- Figure 4 shows a detailed synthetic procedure for a polymerogenic mixture.
- Figure 5 shows a detailed synthetic procedure for a further polymerogenic mixture.
- Figure 6 shows a detailed synthetic procedure for yet another polymerogenic mixture.
- Figure 7 shows a detailed synthetic procedure for a mixture of isomers.
- Figure 8 exemplifies the cyclic voltammetries during the chemical polymerization of a mixture.
- Figure 9 exemplifies the spectroelectrochemical characterization of a polymer.
- Figure 10 exemplifies the spectroelectrochemical characterization of a further polymer.
- Figure 11 exemplifies an electrochemical cell containing the electrochromic film obtained by oxidative polymerization of a mixture.
- Figure 12 exemplifies an electrochemical cell containing the electrochromic film obtained by oxidative polymerization of a further mixture.
- Figure 13 shows general formulae of compounds according to the present invention.
- Figure 14 shows heterocyclic groups, which may be used in compounds according to the present invention.

### [DETAILED DESCRIPTION OF THE INVENTION]

### Example 1

Figure 2 shows the detailed synthetic procedure for the polymerogenic mixture 1.

The polymerogenic mixture 1 is obtained by esterification reaction of the mixture of acids 2 and of alcohol 3. In its turn, the mixture of acids 2 is obtained by reaction of the mixture of derivatives 4.

The mixture of derivatives 4 is a commercially available product or, as an alternative, it can be prepared, preferably but not exclusively, with glutaric anhydride as defined in patent application US2004/0085711A1 by Bayer U. Merkel, K. Reuter, K. Lerch.

The mixture of isomers 2 (C+D) is preferably prepared according to the procedure described below, still with reference to Figure 2.

Triethylamine (1.035 g, 10.23 mmol) is added, by dripping under nitrogen atmosphere at 0°C, to a suspension of glutaric anhydride (1.556 g, 13.64 mmol) and chlorhydrate trimethylamine (65.2 mg, 0.682 mmol) in CH₂Cl₂ (20 ml).

A solution of EDOT-MeOH (mixture of isomers A+B, 1.174 g, 6.82 mmol) in CH₂Cl₂ (7 ml) is added by dripping, and the suspension is stirred at 0°C for 3h. The solution is washed 3 times with HCl 10% (30 ml total). The organic phase is dried overnight over sodium sulfate. The solvent is evaporated to give a viscous oil, which is dissolved into 40 ml of NaHCO₃ 0.5 M and left under stirring for 1 h. The solution is acidified (pH<1) with HCl (aq.) 10% and is then extracted with toluene (25 ml). The organic phase is separated, dried over sodium sulfate and brought to dryness to give the product as a pale yellow viscous oil. (1.394 g, yield 71%). The product crystallizes slowly in 6 months to give a white solid (pf.: 53-60°C).

1H NMR (500MHz, CDCl3) [ppm]: 6.51 (s, 2H ProDOT), 6.37 (d, J=3.7Hz, 1H CH2-EDOT), 6.35 (d, J=3.7Hz, 1H CH2-EDOT), 5.25 (here, J=4.6Hz, 1H ProDOT), 4.40-4.36 (m, 1H CH2-EDOT), 4.35-4.29 (m, 2H CH2-EDOT), 4.27-4.20 (m, 1H CH2-EDOT + 4H ProDOT), 4.06-4.02 (m, 1 H CH2-EDOT), 2.51-2.44 (m, 4H (CH2-EDOT + ProDOT)), 2.09-1.94 (m, 2H (CH2-EDOT + ProDOT)); CH2-EDOT:ProDOT ratio= 4:1; 13C NMR (125.7MHz, CDCl3) [ppm]: 178.49, 172.54, 141.26, 141.07, 100.86-99.49 (m), 71.52, 65.66, 62.48, 32.94, 32.84, 19.77; Anal. Calcd for C12H14O6S: C, 50.34; H, 4.93. Found: C, 50.63; H, 5.58.

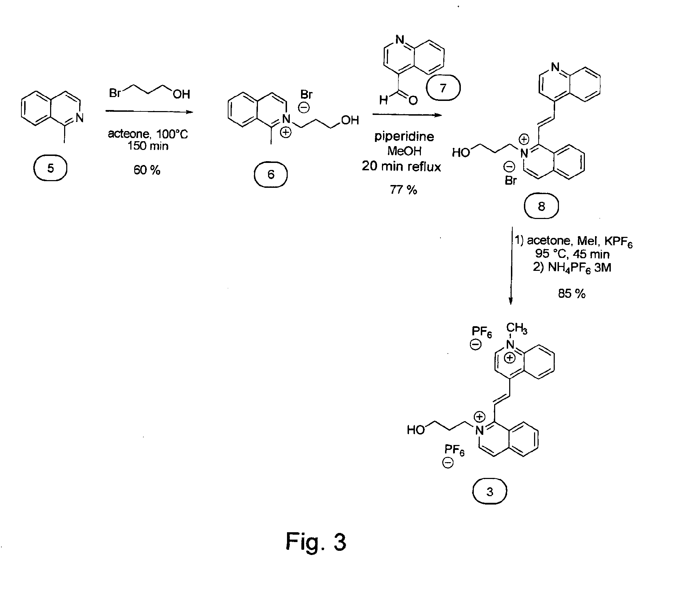

Figure 3 shows the detailed synthetic procedure for the derivative 3.

1-methyl-isoquinoline 1 is alkylated with 1,3-bromopropanol in acetone in a closed vessel to give bromide salt 6. Condensation of the bromide salt 6 with aldehyde 7 in a reflux mixture of pipiredine and methanol leads to the derivative 8. Alkylation of the derivative 8 with methyl iodide in acetone and subsequent counterion exchange in an aqueous solution of hexafluorophosphate of ammonium lead to the derivative 3, with a total yield for all three steps of 39 %.

The derivative 6 is preferably prepared in accordance with the procedure described below, still with reference to Figure 3.

A mixture of compound 5 (4.00 g, 27.9 mmol), 3-bromo-1-propanol (4.84 g, 344.8 mmol) and 10 ml of acetone is heated in a CEM Discover microwave reactor for 2.5 hours (Pmax=25W, Pmax=6.3 bar, 95°C, cooling off, 35ml vessel) and is subsequently cooled to room temperature (hereafter also referred to as "r.t."). The reaction vessel is then left overnight at -18°C; the white precipitate is separated by vacuum filtration, washed with acetone and then with Et2O. The residual solvent is evaporated at low pressure (0.4 torr) at 40°C (5.186 g, 18.37 mmol, yield 66%, p.f.:176-177 °C). The product can be further purified by crystallization with isopropanol.

1H NMR (200MHz, DMSO-d6) [ppm]: 8.79-8.73 (m, 2H), 8.44 (d, J=6.9Hz, 1H), 8.31 (d, J=7.8Hz, 1H), 8.20 (t, J=6.9Hz, 1H), 8.03 (t, J=7.8Hz, 1H), 4.84 (t, J=7.3Hz, 2H), 3.54 (t, J=5.7Hz, 2H), 3.31 (s, 3H), 2.10 (here, J=6.3Hz, 2H); Anal. Calc for C13H16BrNO: C, 55.33; H, 5.72; N, 4.96. Found: C, 54.96; H, 6.05; N, 4.87.

The derivative 8 is preferably prepared in accordance with the procedure described below, still with reference to Figure 3.

A mixture of derivative 6 (10.341 g, 36.64 mmol) and quinoline-4-carboxaldehyde (6.507 g, 41.40 mmol) is added with a solution of piperidine (1.0 ml, 862 mg, 10.12 mmol) in 10 ml of MeOH. The mixture is heated to reflux for 20 min, thereby obtaining a homogeneous red solution. The mixture is allowed to cool to room temperature and the product is left to crystallize at r.t. overnight. The solid thus obtained is filtered at low pressure by washing it with 10 ml of acetone, followed by 30 ml of Et2O. The solid is dried at low pressure at 50°C. The product is obtained as a yellow solid (13.199 g, 31.3 mmol, yield 86%, p.f.: 191 °C (dec.)).

1HNMR(500MHz, DMSO-d6) [ppm]: 9.10 (d, J=4.5Hz, 1H), 8.95 (d, J=6.9Hz, 1H), 8.66-8.63 (m, 2H), 8.44 (d, J=8.1Hz, 1H), 8.32-8.27 (m, 3H), 8.20 (d, J=4.5Hz, 1H), 8.16-8.13 (m, 2H), 8.08 (t, J=7.75Hz, 1H), 7.85 (t, J=6.7Hz, 1H), 7.70 (t, J=8.0Hz, 1H), 4.94 (t, J=7.4Hz, 2H), 4.85 (t, J=4.9Hz, 1H), 3.53 (q, J=5.3Hz, 2H), 2.17 (here, J=6.7Hz, 2H); 13CNMR(125.7MHz, DMSO-d6) [ppm]: 157.11, 150.98, 148.73, 140.16, 140.05, 137.93, 136.73, 136.32, 131.84, 130.54, 130.34, 130.17, 128.20, 127.89, 127.87, 126.04, 125.49, 124.33, 123.34, 119.03, 57.77, 56.78, 32.99; Anal. Calc for C23H21BrN2O·0.5CH30H·0.25H2O: C, 63.88; H, 5.36; N, 6.34. Found: C, 63.72; H, 5.52; N, 6.40.

The derivative 6 is preferably prepared in accordance with the procedure described below, still with reference to Figure 3.

A suspension of derivative 8 (3.00 g, 7.12 mmol) and KPF6 (3.100 g, 16.84 mmol) in 10.5 ml of acetone is kept under stirring at room temperature for 20 min. MeI (1.65 g, 11.66 mmol) is then added, and the mixture is heated in a CEM Discover microwave reactor for 50 min (Pmax=25W, 6.3 bar, 95°C, cooling off, 35 ml closed vessel); it is then cooled to room temperature. After 12 hours at this temperature, the solid is filtered at low pressure by washing it with acetone and then with Et2O. The orange solid thus obtained is suspended into 18 ml of NH4PF6(aq) 30% and kept under stirring at r.t. for 3 days. The suspension is filtered at low pressure by washing the precipitate with a few ml of distilled water and then with EtOH. It is then dried at low pressure (0.4 torr) at 40°C, thereby obtaining the product as a pale yellow solid (3.77 g, 5.83 mmol, yield 82%, p.f.: 199-201 °C).

1HNMR(500MHz, DMSO-d6) [ppm]: 9.67 (d, J=6.2Hz, 1H), 8.93 (d, J=6.8Hz,1H), 8.77 (d, J=6.1Hz, 1H), 8.7-8.65 (m, 3H), 8.62 (d, J=8.9Hz, 1H), 8.50 (d, J=16.3Hz, 1H),8.45 (d, J=8.2Hz, 1H), 8.41 (d, J=16.3Hz, 1H), 8.38-8.31 (m, 2H), 8.14-8.08 (m, 2H), 4.91 (t, J=7.2Hz, 2H), 3.52 (t, J=5.7Hz, 2H), 2.16 (here, J=6.4Hz, 2H);

13CNMR(125.7MHz, DMSO-d6) [ppm]: 155.92, 150.24, 149.95, 139.20, 137.98, 137.39, 137.00, 136.44, 135.92, 131.98; 130.79, 130.42, 129.20, 128.26, 127.67, 127.41, 126.71, 126.09, 120.24, 119.78, 57.72, 56.97, 46.00, 33.08; Anal. Calcd for C24H24F12N2OP2: C, 44.60; H, 3.74; N, 4.33. Found: C, 44.56; H, 3.82; N, 4.29.

The mixture of isomers 1 is preferably prepared according to the procedure described below, with reference to Figure 2.

Under nitrogen atmosphere, a suspension of compound 3 (6.000g, 9.28mmol), mixture of isomers 2 (2.737g, 9.56mmol, 80:20 CH2-EDOT:ProDOT), DCC (2.107g, 10.20mmol) and DMAP (62mg, 0.51mmol) is prepared in 60 ml of anhydrous MeCN. Precipitation of a white solid is observed. It is then stirred at r.t. for 60 hours. The precipitate is filtered away by washing it with acetonitrile. The filtrate is collected and evaporated at low pressure, thereby obtaining a black solid, which is sonicated for 15 min with Et2O (50 ml). The product is collected by filtration at low pressure and is resuspended into 50 ml of EtOH, keeping it under stirring at r.t. for 72h. The mixture is filtered at low pressure, thereby obtaining the product as a brown solid (7.338g, yield 87%, p.f.: 77-87 °C).

1HNMR(500MHz, DMSO-d6) [ppm]: 9.69 (d, J=6.3Hz, 1H (CH2-EDOT + ProDOT)), 8.94 (d, J=6.9Hz, 1H (CH2-EDOT + ProDOT)), 8.81 (d, J=6.2Hz, 1H (CH2-EDOT + ProDOT)), 8.71 (d, J=6.8Hz, 1H (CH2-EDOT + ProDOT)), 8.66-8.61 (m, 3H (CH2-EDOT + ProDOT)), 8.50 (d, J=16.3Hz, 1H (CH2-EDOT + ProDOT)), 8.45 (d, J=8.2Hz, 1H (CH2-EDOT + ProDOT)), 8.41 (d, J=16.3Hz, 1H (CH2-EDOT + ProDOT)), 8.37-8.32 (m, 2H (CH2-EDOT + ProDOT)), 8.13-8.08 (m, 2H (CH2-EDOT + ProDOT)), 6.81 (s, 2H ProDOT), 6.61 (d, J=3.6Hz, 1H CH2-EDOT), 6.60 (d, J=3.5Hz, 1H CH2-EDOT), 5.12 (here, J=3.7Hz, 1H ProDOT), 4.91 (t, J=7.5Hz, 2H (CH2-EDOT + ProDOT)), 4.72 (s, 3H (CH2-EDOT + ProDOT)), 4.41-4.39 (m, 1H CH2-EDOT), 4.29-4.20 (m, 2H CH2-EDOT + 4H ProDOT), 4.14-4.10 (m, 1H CH2-EDOT + 2H (CH2-EDOT + ProDOT)), 4.02-3.98 (m, 1H CH2-EDOT), 2.34-2.24 (m, 4H (CH2-EDOT+ ProDOT)), 2.12-2.07 (m, 2H (CH2-EDOT + ProDOT)), 1.62-1.54 (m, 2H (CH2-EDOT + ProDOT)); CH2-EDOT:ProDOT ratio=4:1;

13C NMR (125.7MHz, DMSO-d6) [ppm]: 172.76, 156.26, 150.18, 150.06, 141.66, 141.54, 139.27, 138.16, 137.68, 137.28, 136.49, 136.08, 132.17, 130.94, 130.58, 129.23, 128.40, 127.85, 127.49, 126.75, 126.33, 120.40, 119.94, 100.62, 100.55, 71.89, 65.52, 62.64, 61.42, 56.64, 46.16, 32.77, 32.75, 29.40, 20.06; Anal. Calc for C36H36F12N2O6P2S: C, 47.27; H, 3.97; N, 3.06. Found: C, 46.79; H, 4.22; N, 3.63.

### Example 2

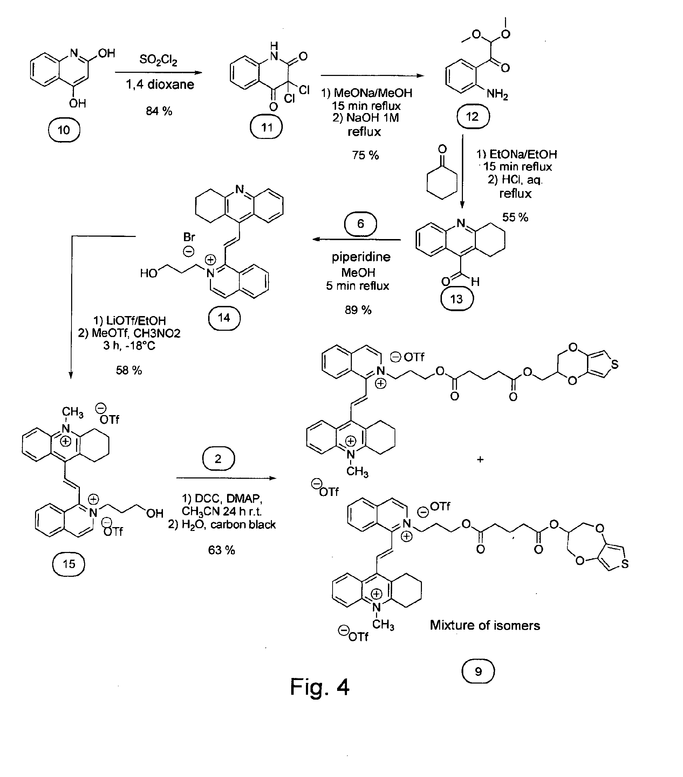

Figure 4 shows a detailed sinthetic procedure for a preferred mixture of compounds, i.e. the polymerogenic mixture 9.

The formula 9 is taken from the general formulae (I) and (II), according to an explanatory and non-limiting example of the scope of the invention.

The polymerogenic mixture 9 is obtained by esterification reaction of the mixture of acids 2 and of alcohol 15.

More in detail, the aldehyde 13 is prepared in 3 steps in accordance with the method proposed by Ziegler, a description of which can be found in the following document: (E. Ziegler, Th. Kappe Mh. Chem. 96, 889, 1965).

The derivative 13 is condensed with bromide salt 6 in a mixture of methanol and piperidine to give the derivative 14. Alkylation of 14 with methyl trifluoromethanesulfonate gives the disalt 15, which is condensed with the mixture of acids 2 to give the polymerogenic mixture 9, with a total yield of 33 % starting from the aldehyde 13.

The derivative 11 is preferably prepared in accordance with the procedure described below, still with reference to Figure 4.

Preferably, the derivative 11 is prepared as described in the following document: (E. Ziegler, Th. Kappe Mh. Chem. 96, 889, 1965).

SO2Cl2 (41.7g, 308mmol, 25.0ml) is dripped under stirring into a suspension of 2,4-dihydroxyquinoline (10) (20.810g, 129.1mmol) in 1,4-dioxane (75ml) at 50° C. A yellow solution is obtained, which is brought to reflux for 30 min, observing gas evolution. The mixture is cooled to r.t. and is carefully added to 300 g of ice, keeping it under stirring for 30 min. Precipitation of a yellow solid is observed, which is then filtered in a Buechner funnel. The solid is dried at low pressure at 50°C (27.87g, 121.1mmol, yield 94%). The product contains some impurity (5%), but can be used in the next step without any further purification.

1H NMR (500MHz, DMSO-d6) [ppm]: 11.42 (s, 1H), 7.90 (dd, J=7.8Hz, J=1.0Hz, 1H), 7.69 (td, J=8.0Hz, J=0.9Hz, 1H), 7.21 (t, J=7.7Hz, 1H), 7.15 (d, J=8.0Hz, 1H).

The derivative 12 is preferably prepared in accordance with the procedure described below, still with reference to Figure 4.

Preferably, the derivative 12 is prepared as described in the following document: (E. Ziegler, Th. Kappe Mh. Chem. 96, 889, 1965).

A suspension of 11 (15.000g, 65.20mmol) in anhydrous MeOH is added drop by drop to a solution of NaOMe (195.6mmol) in 50ml of MeOH. After 30 min, the orange suspension thus obtained is heated to reflux for 5 min and then cooled to r.t.. A 1M solution of NaOH (300ml) is added to the mixture, thereby obtaining a clear solution which is left under stirring overnight. The solvent is distilled away until the temperature of the vapours gets close to 100°C. The mixture is kept at reflux for 1h and is then cooled to r.t.. Precipitation of a yellow solid is obtained, which is recovered through filtration at low pressure by washing the solid with water (100ml). The product is dried at 50°C at low pressure and is further purified by crystallization with cyclohexane (9.406g, 48.2mmol, yield 74%, m.p.: 99-100°C).

1HNMR(500MHz, DMSO-d6) [ppm]: 7.87 (d, J=8.3Hz, 1H), 7.26 (t, J=7.0Hz, 3H), 6.78 (d, J=8.4Hz, 1H), 6.52 (t, J=7.4Hz, 1H), 5.24 (s, 1H), 3.38 (s, 6H).

The derivative 13 is preferably prepared in accordance with the procedure described below, still with reference to Figure 4.

Preferably, the derivative 12 is prepared as described in the following document: (E. Ziegler, Th. Kappe Mh. Chem. 96, 889, 1965).

In a 50ml flask equipped with reflux and CaCl2 valve, a solution of NaOEt (13 mmol) in 20 ml of EtOH is prepared. Cyclohexanone (1005 mg, 10.24 mmol) and compound 12 (1000 mg, 5.12 mmol) are then added, and the solution is heated to reflux for 20 min, allowed to cool to r.t., and kept under stirring for 2h. The volume of the solution is reduced to 10 ml by evaporating the solvent at low pressure. 50 ml of water are added, and the solution is acidified with 4 ml of HCl _{(aq.)} 37%. The solution is heated quickly to reflux for 7 min. The mixture is poured into 100 g of ice and is basified to pH 9 with Na2CO3. The mixture is extracted with 100 + 4x30 ml of Et2O, thus collecting the organic phase. This is then dried over MgSO4 and brought to dryness by evaporating the solvent at low pressure. A yellow oil is obtained, which is declotted with n-hexane by filtering the obtained solid at low pressure. The residual solvent is evaporated at 40°C at low pressure. Light brown solid (827 mg, 3.91 mmol, yield 76%, p.f.: 76-78°C).

1HNMR (500MHz, CDCl3) [ppm]: 11.00 (s, 1H), 8.49 (d, J=8.5Hz, 1H), 8.09 (broad s, 1H), 7.70 (t, J=7.5Hz, 1H), 7.59 (t, J=7.4Hz, 1H), 3.30 (t, J=6.4Hz, 2H), 3.24 (t, J=6.1Hz, 2H), 2.04-1.94 (m, 4H). ¹³C NMR (125.7MHz, CDCl3) [ppm]: 194.10, 159.72, 146.40, 135.08, 132.49, 129.45, 128.73, 128.08, 123.65, 123.34, 34.03, 26.16, 22.58, 22.27.

The derivative 14 is preferably prepared in accordance with the procedure described below, still with reference to Figure 4.

A solution of piperidine (39mg, 0.46mmol) in 1ml of MeOHA is added to a mixture of compound 6 (1302mg, 4.61mmol) and compound 13 (1072mg, 5.07mmol); the mixture is then heated to reflux on a bain-marie. A homogeneous red solution is thus obtained, which solidifies in 3 min to give a pale yellow solid. The mixture is heated for additional 5 min and is then cooled to r.t.. It is sonicated with 15ml of EtOH and filtered at low pressure by washing the solid with EtOH and Et2O. The residual solvent is evaporated at low pressure at 50°C, thereby obtaining the product as a pale yellow solid (2.005g, 4.22mmol, yield 91%, p.f.: 247 °C (dec.)).

1HNMR(500MHz, DMSO-d6) [ppm]: 8.87 (d, J=6.9Hz, 1H), 8.76 (d, J=8.6Hz, 1H), 8.61 (d, J=6.9Hz, 1H), 8.43 (d, J=8.2Hz, 1H), 8.31 (t, J=7.8Hz, 1H), 8.22 (d, J=8.4Hz, 1H), 8.12 (t, J=7.7Hz, 1H), 7.99 (d, J=8.4Hz, 1H), 7.84 (d, J=16.8Hz, 1H), 7.74 (t, J=7.7Hz, 1H), 7.64 (d, J=16.8Hz, 1H), 7.59 (t, J=7.5Hz, 1H), 4.87 (t, J=7.5Hz, 2H), 4.79 (t, J=4.8, 1H), 3.51 (q, J=5.2Hz, 2H), 3.13 (t, J=6.6Hz, 4H), 2.17 (here, J=7.0Hz, 2H), 1.98-1.91 (m, 4H).

The derivative 15 is preferably prepared in accordance with the procedure described below, still with reference to Figure 4.

In a 100ml two-necked flask, a suspension of 14 (910 mg, 1.91 mmol) in 30ml of EtOH is brought to reflux and MeOH is added until complete dissolution is obtained (35ml). A solution of LiOTf (2.986g, 19.1mmol) in 3ml of MeOH is added to the mixture, which is then kept at reflux for 30 min. The volume of the mixture is reduced to 20 ml by evaporating the solvent at low pressure, and the white precipitate thus obtained is filtered by washing with EtOH (856mg, 1.57mmol, yield 82%, p.f.: 206-207°C).

Under nitrogen atmosphere, the product thus obtained is suspended (850mg, 1.56mmol) into 20ml of dry MeNO2 cooled to -5°C by using an ice and salt bath. MeOTf (282mg, 1.72mmol) is dripped into the mixture, which is then kept under stirring at -5°C for 3h and at r.t. for 12h. Et2O is added and after 30 min under stirring a white solid is obtained, which is filtered by washing with i-PrOH and Et2O; finally, the solid is dried at low pressure (850mg, 1.20mmol, yield 77%, p.f.: 173-174°C).

1HNMR(500MHz, DMSO-d6) [ppm]: 8.90 (d, J=6.8Hz, 1H), 8.77 (d, J=8.5Hz, 1H), 8.70-8.66 (m, 2H), 8.59 (d, J=8.3Hz, 1H), 8.45 (d, J=8.2Hz, 1H), 8.34 (t, J=7.7Hz, 1H), 8.26 (t, J=7.8Hz, 1H), 8.15 (t, J=7.3Hz, 1H), 8.04-7.99 (m, 2H), 7.79 (d, J=16.9Hz, 1H), 4.84 (t, J=7.3Hz, 2H), 4.54 (s, 3H), 3.55-3.45 (m, 4H), (broad s, 2H), 3.13 (broad s, 1H), 2.13 (m, 2H), 2.03 (m, 2H), 1.89 (m, 2H).

The mixture of isomers 9 is preferably prepared according to the procedure described below, still with reference to Figure 4.

Under N2 atmosphere, a suspension of mixture of isomers 2 (361mg, 1.26mmol, 80:20 CH2-EDOT:ProDOT), 15 (850mg, 1.20mmol), DCC (273mg, 1.32mmol) and DMAP (8mg, 0.07mmol) in 15ml of anhydrous Acetonitrile is prepared. Formation of a white precipitate is observed. The solution is kept under stirring at r.t. for 22h. The mixture is filtered by washing the solid with Acetonitrile (60ml). The filtrate is collected and the solvent is evaporated at low pressure, thereby obtaining a gummy solid, which is then washed with Et2O (4ml×100ml), thereby obtaining a pale green solid. The product is filtered by washing with Et2O (20ml) and the solid is dried at low pressure (1027mg, 1.051mmol, yield 83%).

1HNMR(500MHz, DMSO-d6) [ppm]: 8.89 (d, J=6.3Hz, 1H (CH2-EDOT + ProDOT)), 8.79 (d, J=8.1Hz, 1H (CH2-EDOT + ProDOT)), 8.70-8.66 (m, 2H (CH2-EDOT + ProDOT)), 8.57 (d, J=8.1Hz, 1 H (CH2-EDOT + ProDOT)), 8.46 (d, J=8.0Hz, 1H (CH2-EDOT + ProDOT)), 8.34 (t, J=7.3Hz, 1H (CH2-EDOT + ProDOT)), 8.25 (t, J=8.3Hz, 1H (CH2-EDOT + ProDOT)), 8.16 (t, J=7.2Hz, 1H (CH2-EDOT + ProDOT)), 8.02-7.99 (m, 2H (CH2-EDOT +ProDOT)), 7.79 (d, J=16.6Hz, 1H (CH2-EDOT + ProDOT)), 6.79-6.78 (m, 2H ProDOT), 6.59 (broad s, 2H CH2-EDOT), 5.18-5.12 (m , 1H ProDOT), 4.84 (s, 2H (CH2-EDOT + ProDOT)), 4.55 (s, 3H (CH2-EDOT +ProDOT)), 4.42 (s, 1H CH2-EDOT), 4.27 (s, 2H CH2-EDOT + 4H ProDOT), 4.17-4.12 (m, 1H CH2-EDOT + 2H (CH2-EDOT + ProDOT)), 4.04-4.02 (m, 1H CH2-EDOT), 3.54 (s, 2H (CH2-EDOT + ProDOT)), 2.40 (t, J=7.4Hz, 2H)

### Example 3

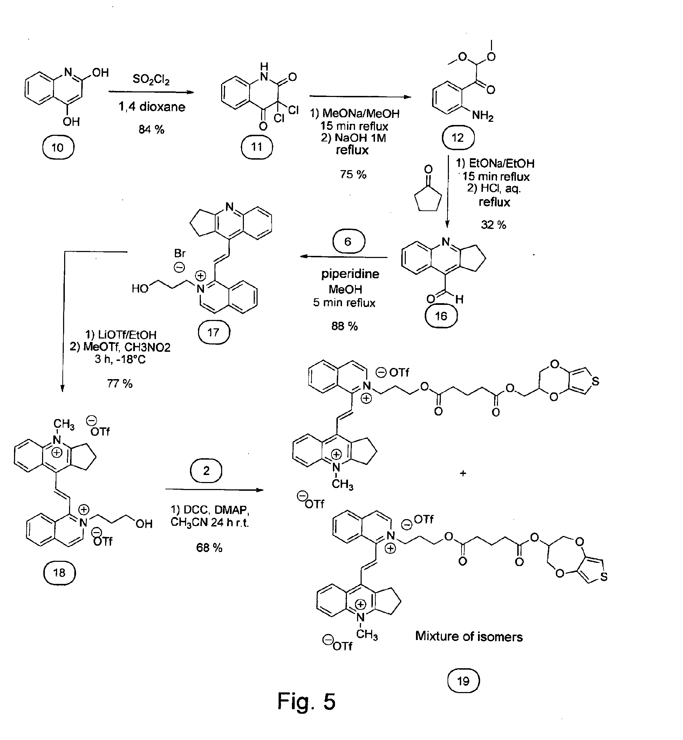

Figure 5 shows a detailed sinthetic procedure for a preferred mixture of compounds, i.e. the polymerogenic mixture 19.

The polymerogenic mixture 19 is taken from the general formulae (I) and (II), according to an explanatory and non-limiting example of the scope of the invention.

The polymerogenic mixture 19 is obtained by esterification of the mixture of acids 2 and of alcohol 18. The complete synthesis protocol is shown in Figure 5.

More in detail, the aldehyde 16 is prepared in 3 steps in accordance with the Ziegler method, which has been described, for example, in the following document: (E. Ziegler, Th. Kappe Mh. Chem. 96, 889, 1965).

The derivative 16 is condensed with bromide salt 6 in a mixture of methanol and piperidine to give the derivative 17. Alkylation of 17 with methyl trifluoromethanesulfonate gives the disalt 18, which is condensed with the mixture of acids 2 to give the polymerogenic mixture 19, with a total yield of 32 % starting from the aldehyde 16.

The derivative 16 is preferably prepared in accordance with the procedure described below, with reference to Figure 5.

In a 100ml flask, under nitrogen atmosphere, a solution of NaOEt in EtOH (10ml, 6.66mmol, 0.67M) is prepared. A solution of cyclopentanone (474mg, 5.63mmol) and compound 12 (1.000g, 5.12mmol) in dry EtOH (20ml) is added, and then the mixture is heated to reflux. The bright yellow solution becomes pale yellow in a few minutes. The solution is kept at reflux for 20 min and is cooled to r.t.. The solvent is evaporated at low pressure and 50 ml of water are added to the mixture. The mixture is acidified by adding HCl(conc.) (5ml) and is brought quickly to reflux for 10 min. The mixture is quickly cooled to room temperature by pouring ice. Extraction is done with 3×50ml of CH2Cl2, and the aqueous phase is collected. This is then basified to pH 9 with NaOH (aq) 5% and extracted with 2x50ml of AcOEt. The organic phase is dried over Na2SO4 and filtered over silica. The product is obtained as a pale yellow solid after evaporating the solvent at low pressure (344mg, 1.74mmol, yield 32%, p.f.: 110-111°C).

1H NMR (500MHz, CDCl3) [ppm]: 10.81 (s, 1H), 8.78 (d, J=8.4Hz, 1H), 8.06 (d, J=8.3Hz, 1H), 7.68 (t, J=7.4Hz, 1H), 7.59 (t, J=7.2Hz, 1H), 3.41 (t, J=7.5Hz, 2H), 3.18 (t, J=7.8Hz, 2H), 2.27 (here, J=7.6Hz, 2H).

The derivative 17 is preferably prepared in accordance with the procedure described below, still with reference to Figure 5.

In a 100ml flask, a solution of piperidine (25mg, 0.3mmol) in 1 ml of MeOH is added to a mixture of compound 6 (859mg, 3.05mmol) and compound 16 (650mg, 3.29mmol); the mixture is then heated to reflux on a bain-marie. A homogeneous solution is thus obtained, which solidifies in 3 min to give a pale yellow solid. After 5 min at reflux, cooling to r.t. and sonication with 20 ml of MeOH, the solid is filtered at low pressure by washing with MeOH and Et2O. The solid is dried at low pressure at 50°C, thereby obtaining the product as a pale yellow solid 17 (1.238g, 2.68mmol, yield 88%, p.f.: 262-263°C).

In a 100ml two-necked flask, 17 (1.200g, 2.60mmol) is suspended in 30ml di EtOH and brought to reflux. MeOH is added until a homogenous solution (30ml) is obtained. A solution of LiOTf (4.056g, 26mmol) in 5ml of MeOH is added, and the solution is kept at reflux for 30 min. The volume of the mixture is reduced to 20 ml by evaporating the solvent at low pressure, and the white precipitate thus obtained is filtered by washing with EtOH (953mg, 1.80mmol, yield 69%, m.p.: 253-254°C).

1HNMR(500MHz, DMSO-d6) [ppm]: 8.87 (d, J=6.9Hz, 1H), 8.69 (d, J=8.6Hz, 1H), 8.62 (d, J=6.9Hz, 1H), 8.42 (d, J=8.2Hz, 1H), 8.30 (t, J=7.3Hz, 1H), 8.17 (d, J=8.3Hz, 1H), 8.10-8.05 (m, 2H), 8.03 (d, J=8.3Hz, 1H), 7.78-7.72 (m, 2H), 7.58 (t, J=7.5Hz, 1H), 4.87 (t, J=7.5Hz, 2H), 4.80 (t, J=4.8Hz, 1H), 3.50 (q, J=5.5Hz, 2H), 3.46 (t, J=7.3Hz, 2H), 3.21-3.17 (m, 2H), 2.25 (here, J=7.5Hz, 2H), 2.16 (here, J=6.7Hz, 2H).

The derivative 18 is preferably prepared in accordance with the procedure described below, still with reference to Figure 5.

Under N2 atmosphere, the derivative 17 (950mg, 1.60mmol) is suspended in dry MeNO2 (15ml) and the mixture is cooled to -5°C with an ice and salt bath. A solution of MeOTf (289mg, 1.76mmol) in MeNO2 (6ml) is dripped under stirring into the mixture. After 2h at -5°C, the mixture is allowed to warm to r.t. and is kept under stirring for 12h. The mixture is cooled again to -5°C and more MeOTf (262mg, 1.60mmol) is added; the mixture is then kept under stirring at -5°C for 4h. The product is precipitated by adding Et2O and filtered with a Hirsh funnel; the residual solvent is then evaporated in vacuo (837mg, 1.20mmol, yield 75%, m.p.: 169-170°C).

1HNMR (500MHz, DMSO-d6) [ppm]: 8.91 (d, J=7.0Hz, 1H), 8.69-8.67 (m, 2H), 8.61 (d, J=8.9Hz, 1H), 8.52 (d, J=8.0Hz, 1H), 8.45 (d, J=8.45Hz, 1H), 8.33 (t, J=7.6Hz, 1H), 8.24-8.19 (m, 2H), 8.11 (t, J=7.8Hz, 1H), 8.02-7.97 (m, 2H), 4.85 (t, J=7.4Hz, 2H), 4.80 (broad s, 1H), 4.54 (s, 3H), 3.75 (t, J=7.7Hz, 2H), 3.62 (t, J=7.6Hz, 2H), 3.49 (t, J=5.6Hz, 2H), 2.41 (here, J=7.5Hz, 2H), 2.15 (here, J=7.0Hz, 2H); 13C NMR (125.7MHz, DMSO-d6) [ppm] : 168.88, 156.31, 144.21, 138.41, 138.07, 137.95, 137.85, 136.92, 136.24, 134.10, 132.02, 130.38, 129.90, 129.53, 128.31, 127.61, 126.86, 126.75, 125.94, 119.68, 57.68, 56.95, 41.75, 35.03, 32.95, 32.00, 22.76.

The mixture of isomers 19 is preferably prepared according to the procedure described below, still with reference to Figure 5.

Under N2 atmosphere, a suspension of compound 2 (91mg, 0.32mmol, 80:20 mixture), compound 18 (200mg, 0.29mmol), DCC (72mg, 0.35mmol) and DMAP (2mg, 0.02mmol) in 3 ml of anhydrous Acetonitrile is prepared. The mixture is kept under stirring at room temperature (r.t.) for 24h. The mixture is filtered by washing the precipitate with Acetonitrile. The filtrate is collected and the solvent is evaporated at low pressure, thereby obtaining a sticky solid, which is declotted by sonication with Et2O. The product is dissolved into EtOH (1ml) and 1ml of NH4PF6 (aq) 5M is added. Precipitation of a light green solid is obtained, which is recovered through filtration at low pressure by washing with 5 ml of EtOH. The pale green solid is dried at low pressure (189mg, 0.198mmol, yield 68%).

1H NMR (500MHz, T=353K, DMSO-d6) [ppm]: 8.89 (d, J=6.7Hz, 1H (CH2-EDOT + ProDOT)), 8.70-8.66 (m, 2H (CH2-EDOT + ProDOT)), 8.61 (d, J=8.9Hz, 1H), 8.51 (d, J=8.4Hz, 1H (CH2-EDOT + ProDOT)), 8.45 (d, J=8.2Hz, 1H (CH2-EDOT + ProDOT)), 8.34 (t, J=7.6Hz, 1H (CH2-EDOT + ProDOT), 8.24-8.12 (m, 3H (CH2-EDOT + ProDOT), 8.03-7.96 (m, 2H (CH2-EDOT + ProDOT)), 6.74 (s, 2H ProDOT), 6.55-6.52 (m, 2H CH2-EDOT), 5.15 (here, J=3.2Hz, 1H ProDOT), 4.90 (t, J=7.2Hz, 2H (CH2-EDOT + ProDOT)), 4.57 (s, 3H (CH2-EDOT + ProDOT)), 4.43-4.39 (m, 1H CH2-EDOT), 4.29-4.26 (m, 2H CH2-EDOT + 4H ProDOT), 4.21-4.12 (m, 1H CH2-EDOT + 2H (CH2-EDOT + ProDOT)), 4.05-4.01 (m, 1H CH2-EDOT), 3.79 (t, J=7.6Hz, 2H (CH2-EDOT + ProDOT)), 3.64 (t, J=7.3Hz, 2H (CH2-EDOT + ProDOT)), 2.47 (t, J=7.6Hz, 2H (CH2-EDOT + ProDOT)), 2.38 (t, J=7.0Hz, 2H (CH2-EDOT+ ProDOT)), 2.33-2.28 (m, 2H (CH2-EDOT + ProDOT)), 2.15 (t, J=7.4Hz, 2H (CH2-EDOT + ProDOT)), 1.71-1.64 (m, 2H (CH2-EDOT + ProDOT)); 13C NMR (125.7MHz, T=353K, DMSO-d6) [ppm]: 172.52, 172.47, 168.83, 168.30, 156.39, 144.56, 141.57, 138.63, 138.31, 138.20, 137.94, 137.09, 136.09, 134.21, 132.12, 130.23, 129.94, 129.40, 128.37, 127.83, 126.95, 126.85, 126.18, 119.58, 106.72, 100.31, 72.66, 71.89, 71.56, 65.61, 62.54, 61.32, 56.72, 41.64, 35.00, 32.93, 32.89, 31.93, 29.31, 22.58, 20.12.

### Example 4

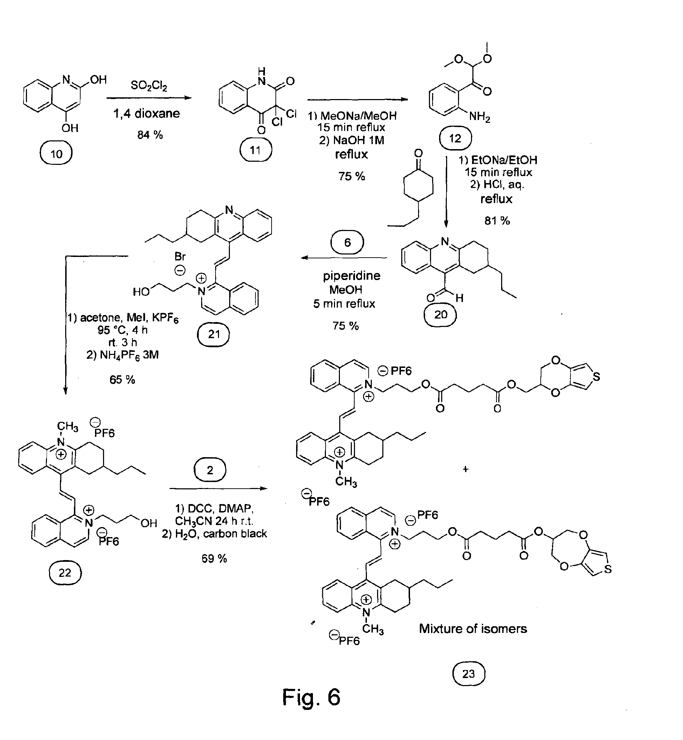

Figure 6 shows a detailed sinthetic procedure for a preferred mixture of compounds, i.e. the polymerogenic mixture 23.

The formula 23 is taken from the general formulae (I) and (II), according to an explanatory and non-limiting example of the scope of the invention.

The polymerogenic mixture 23 is obtained by esterification reaction of the mixture of acids 2 and of alcohol 22. The complete synthesis protocol is shown in Figure 6.

More in detail, the aldehyde 20 is prepared in 3 steps in accordance with the Ziegler method, which has been described, for example, in the following document: (E. Ziegler, Th. Kappe Mh. Chem. 96, 889, 1965).

The derivative 20 is condensed with bromide salt 6 in a mixture of methanol and piperidine to give the derivative 21. Alkylation of 21 with methyl iodide gives the disalt 22, which in turn is condensed with the mixture of acids 2 to give the polymerogenic mixture 23, with a total yield of 34 % starting from the aldehyde 16.

The derivative 20 is preferably prepared in accordance with the procedure described below, with reference to Figure 6.

In a 250ml flask, under N2 atmosphere, a solution of NaOEt in EtOH (20ml, 13mmol, 0.65M) is prepared. 4-*n*-propylcyclohexanone (1.54g, 11.0mmol) and derivative 12 (1.095g, 5.60mmol) are added to the solution, which is then heated to reflux. The bright yellow solution turns pale yellow in a few minutes. It is then kept at reflux for 15 min, cooled to r.t., and kept under stirring for 12h. The volume is reduced to 5ml by evaporating the solvent at low pressure, and 50 ml of water are added. The solution is acidified to pH 1 by adding HCl (conc.), brought to reflux for 10 min, and finally quickly cooled by pouring ice. The mixture is basified to pH 8 with NaHCO3 and extracted with 3×30ml of Et2O. The organic phase is collected, which is then dried over MgSO4 and evaporated at low pressure, thereby obtaining a red oil. This is purified by means of flash chromatography on silica plug (eluent: hexane gradient > hexane/Et2O 1:1). The product is obtained as a pale green solid after solvent evaporation (1.148g, 4.53mmol, yield 81%).

1H NMR (500MHz, CDCl3) [ppm]: 10.98 (s, 1H), 8.47 (d, J=8.1Hz, 1H), 8.06 (d, J=8.4Hz, 1H), 7.68 (t, J=7.7Hz, 1H), 7.57 (t, J=7.7Hz, 1H), 3.47-3.42 (m, 1H), 3.34-3.29 (m, 1H), 3.19-3.12 (m, 1H), 2.81-2.75 (m, 1H), 2.16-2.12 (m, 1H), 1.88-1.83 (m, 1H), 1.62-1.54 (m, 1H), 1.50-1.42 (m, 4H), 0.96 (t, J=6.9Hz, 3H).

The derivative 20 is preferably prepared in accordance with the procedure described below, with reference to Figure 6.

A solution of piperidine (45mg, 0.53mmol) in 0.6 ml of MeOHA is added to a mixture of compound 6 (736mg, 2.61mmol) and aldehyde 20 (747mg, 2.95mmol); the mixture is then heated to reflux on a bain-marie. A homogeneous red solution is thus obtained, which solidifies in 3 min to give a pale yellow solid. The mixture is kept at reflux for additional 15 min and is allowed to cool to r.t.; the solid is then sonicated with acetone and filtered at low pressure by washing with acetone and Et2O. The solid is dried at low pressure at 60°C (1.008g, 1.95mmol, yield 75%, p.f.: 201-202°C).

1HNMR(500MHz, DMSO-d6) [ppm]: 8.90 (d, J=6.9Hz, 1H), 8.77 (d, J=8.6Hz, 1H), 8.64 (d, J=6.9Hz, 1H), 8.45 (d, 8.2Hz, 1H), 8.32 (t, J=7.5Hz, 1H), 8.25 (d, J=8.4Hz, 1H), 8.11 (t, J=7.4Hz, 1H), 7.99 (d, J=8.1Hz, 1H), 7.85 (d, J=16.8Hz, 1H), 7.74 (t, J=7.6Hz, 1H), 7.66-7.58 (m, 2H), 4.89 (m, 2H), 4.80 (t, J=4.8Hz, 1H), 3.51 (q, J=5.2Hz, 2H), 3.29-3.07 (m, 3H), 2.71-2.65 (m, 1H), 2.16 (here, J=6.2Hz, 2H), 2.09-2.07 (m, 1H), 1.85 (m, 1H), 1.61-1.53 (m, 1H), 1.46-1.38 (m, 4H), 0.91 (t, J=6.9Hz, 3H); 13C NMR (125.7MHz, DMSO-d6) [ppm]: 159.11, 157.10, 146.49, 141.07, 139.50, 137.98, 136.65, 136.29, 131.73, 130.31, 129.24, 128.68, 128.33, 127.74, 126.83,125.94, 125.32, 124.92, 124.74, 57.77, 56.78, 38.66, 34.27, 33.74, 32.86, 28.88, 19.97, 14.68.

The derivative 22 is preferably prepared in accordance with the procedure described below, with reference to Figure 6.

A suspension of derivative 21 (700mg, 1.35mmol), KPF6 (606 mg, 3.29 mmol) in 1.5 ml of acetone is kept under stirring at r.t. for 15 min, and then MeI (700 mg, 4.93 mmol) is added. The mixture is heated in a CEM Discover microwave reactor for 4h (Pmax=15W, 95°C, cooling off, 10ml closed vessel) and, after cooling to r.t., is kept under stirring for 3h. The solid is filtered at low pressure and then washed with acetone and Et2O. The solid is suspended into 4ml of NH4PF6 (aq) 30% and is kept under stirring for 24h. It is then filtered by washing with a few ml of NH4PF6 (aq) 30% followed by deionized water. The product is dried at low pressure in a stove at 60°C for 12h, thereby obtaining a white solid (648mg, 0.873mmol, yield 65%, p.f.: 156-160°C).

1H NMR (500MHz, CD3CN) [ppm]: 8.80 (d, J=8.6Hz, 1H), 8.60-8.56 (m, 2H), 8.50-8.47 (m, 2H), 8.38 (d, J=8.1Hz, 1H), 8.32 (t, J=7.8Hz, 1H), 8.24 (t, J=8.0Hz, 1H), 8.14 (t, J=7.6Hz, 1 H), 8.03 (t, J=7.6Hz, 1H), 7.78 (d, J=16.9Hz, 1H), 7.58 (d, J=17.0Hz, 1 H), 4.84 (m, 2H), 4.48 (s, 3H), 3.62-3.54 (m, 3H), 3.45-3.38 (m, 1H), 3.33-3.29 (m, 1H), 2.89 (t, J=4.5Hz, 1H), 2.80-2.75 (m, 1H), 2.29 (m, 1H), 2.22 (t, J=6.0Hz, 2H), 1.92 (s, 1H), 1.71-1.62 (m, 1H), 1.48 (s, 4H), 0.97 (s, 3H);

13C NMR (125.7MHz, T=333K, DMSO-d6) [ppm]: 160.84, 156.00, 149.66, 138.90, 138.88, 138.08, 136.84, 136.29, 134.84, 131.91, 131.81, 130.02, 129.85, 129.14, 128.44, 127.66, 126.040, 125.91, 119.74, 57.83, 57.07, 39.89, 37.45, 34.48, 33.02, 31.60, 30.69, 27.19, 19.76, 14.43.

The mixture of isomers 23 is preferably prepared according to the procedure described below, with reference to Figure 6.

Under N2 atmosphere, a suspension of mixture of isomers 2 (119 mg, 0.416 mmol, 80:20 mixture of isomers), derivative 22 (300 mg, 0.404 mmol), dicyclohexylcarbodiimide (92mg, 0.444 mmol) and dimethylaminopyridine (5mg, 0.04mmol) in 3 ml of anhydrous Acetonitrile is prepared. Precipitation of a white solid is observed. This is kept under stirring at r.t. for 96h. The mixture is filtered by washing the precipitate with Acetonitrile (10ml). The filtrate is collected and the solvent is evaporated at low pressure, thereby obtaining a dark solid, which is then sonicated with Et2O (20 ml), thereby obtaining a yellow solid. The product is filtered and suspended into 10ml of EtOH. It is then left under stirring for 48h. The mixture is filtered at low pressure, thereby obtaining the product as a light brown solid (285mg, 0.287mmol, yield 69%, p.f.: 90-120 °C). 1HNMR(500MHz, DMSO-d6) [ppm]: 8.89 (d, J=6.9Hz, 1H (CH2-EDOT + ProDOT)), 8.82 (d, J=8.6Hz, 1H (CH2-EDOT + ProDOT)), 8.69 (t, J=7.0Hz, 2H (CH2-EDOT + ProDOT)), 8.60 (d, J=8.6Hz, 1H (CH2-EDOT + ProDOT)), 8.47 (d, J=8.2Hz, 1H (CH2-EDOT + ProDOT)), 8.36 (t, J=7.5Hz, 1H (CH2-EDOT + ProDOT)), 8.26 (t, J=8.2Hz, 1H (CH2-EDOT + ProDOT)), 8.15 (t, J=7.3Hz, 1H (CH2-EDOT + ProDOT)), 8.05-8.01 (m, 2H (CH2-EDOT + ProDOT)), 7.78 (d, J=16.8Hz, 1H (CH2-EDOT + ProDOT)), 6.79 (s, 2H ProDOT), 6.62-6.60 (m, 2H CH2-EDOT), 5.12 (here, J=, 1H ProDOT), 4.93-4.76 (m, 2H (CH2-EDOT + ProDOT)), 4.55 (s, 3H (CH2-EDOT + ProDOT)), 4.43-4.40 (m, 1H CH2-EDOT), 4.30-4.22 (m, 2H CH2-EDOT + 4H ProDOT), 4.15-4.10 (m, 1H CH2-EDOT + 2H (CH2-EDOT + ProDOT)), 4.03-4.00 (m, 1H CH2-EDOT), 3.62-3.57 (m, 1H (CH2-EDOT + ProDOT)), 3.56-3.36 (m, 1H (CH2-EDOT + ProDOT)), 3.36-3.25 (m, 1H (CH2-EDOT + ProDOT), 2.81-2.75 (m, 1H (CH2-EDOT + ProDOT)), 2.33-2.25 (m, 4H (CH2-EDOT + ProDOT), 2.23-2.18 (m, 1H (CH2-EDOT + ProDOT)), 2.10 (t, J=7.4Hz, 2H (CH2-EDOT + ProDOT)), 1.92-1.81 (m, 1H (CH2-EDOT + ProDOT)), 1.67-1.55 (m, 3H (CH2-EDOT + ProDOT)), 1.49-1.34 (m, 4H (CH2-EDOT + ProDOT)), 0.91 (t, J=6.4Hz, 3H (CH2-EDOT + ProDOT)), CH2-EDOT:ProDOT ratio=4:1; 13C NMR (500MHz, DMSO-d6) d [ppm]: 172.64, 160.66, 156.19, 149.59, 141.54, 141.42, 139.32, 138.80, 138.10, 136.97, 136.27, 134.88, 132.05, 131.59, 130.25, 129.86, 128.44, 127.69, 127.54, 125.89, 125.87, 119.78, 107.15, 100.49, 100.43, 72.65, 71.79, 71.56, 65.41, 62.54, 61.27, 56.34, 37.54, 34.41, 32.66, 32.63, 32.60, 31.58, 30.76, 29.00, 27.21, 19.97, 19.78, 14.52.

### Example 5

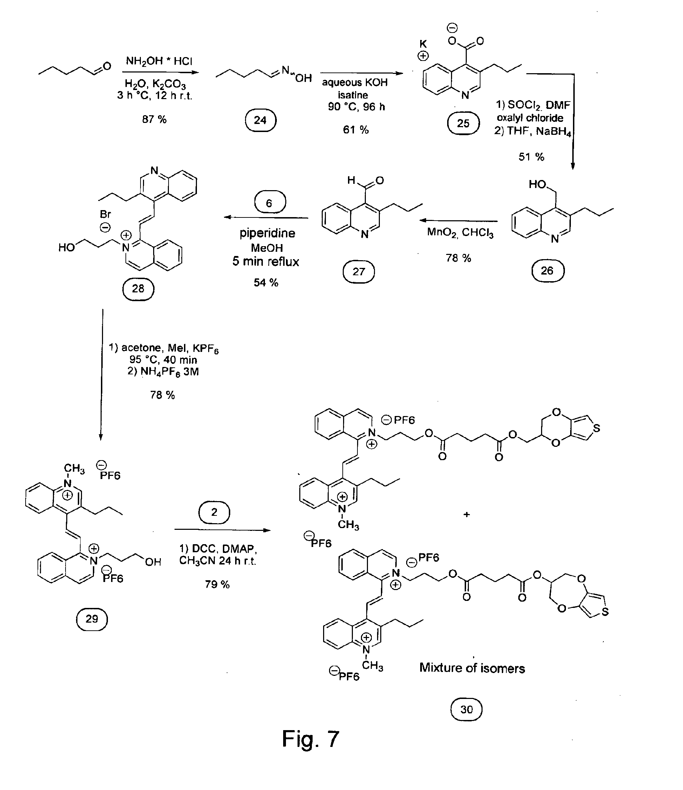

Figure 7 shows a detailed sinthetic procedure for a preferred mixture of compounds, i.e. the mixture of isomers 30.

The formula 30 is taken from the general formulae (I) and (II), according to an explanatory and non-limiting example of the scope of the invention.

The mixture of isomers 30 is obtained through condensation of derivative 29 and mixture of acids 2. The derivative 29, in turn, is synthesized like the derivative 22 by starting from the aldehyde 27. The derivative 27 is obtained by starting from the salt 25, which is the product of the reaction of the oxime 24 and isatine in aqueous potash. Total yield is 33 % starting from the aldehyde. The valeraldehyde oxime 24 is preferably prepared in accordance with the procedure described below, with reference to Figure 7. NH20H·HCl (30.73g, 442.3mmol) is added in portions, followed by K2CO3 (30.56g, 221.1mmol), to 600 ml of deionized water cooled to 5°C with a water and ice bath, thereby obtaining a pale yellow solution. The pentanal (40.00g, 464.4mmol) is then dripped (for approx. 30min). Gas evolution and disappearance of the yellow colour from the solution are observed. The mixture is kept under stirring, allowing the water/ice bath to thaw slowly (3 h). The mixture is left under stirring at r.t. for 12h and is then extracted with 100+4×50m1 of Et2O. The organic phase is collected, dried over MgSO4, and evaporated at low pressure at 60°C, thereby obtaining the product as a white solid (38.755g, 0.383mol, yield 87%, mixture of isomers).

1H NMR (500MHz, CDCl3) d [ppm]: 9.21 (s, 2H syn and anti), 7.41 (t, J=6.2Hz, 1H, anti isomer), 6.73 (t, J=5.3Hz, 1H, syn isomer), 2.38 (q, J=7.5Hz, 2H, syn isomer, 2.20 (q, J=7.7Hz, 2H, anti isomer), 1.47 (m, 2H, syn and anti), 1.35 (sep, J=7.8Hz, 2H, syn and anti), 0.89 (q, J=7.2Hz, 3H, syn and anti), syn/anti ratio = 1.18. 3-propylquinoline-4-carboxylate potassium 25 is preferably prepared in accordance with the procedure described below, still with reference to Figure 7.

In a 1L two-necked flask, a solution of KOH (223.87g of KOH in 280ml of deionized water) is prepared, and isatine (70.00 g, 0.476 mol) is added. The mixture takes a dark colour, and after a few minutes a white solid mass is obtained. Valeraldehyde oxime (30.09 g, 0.2975 mol) is added, and the mixture is heated to 90°C. After a few minutes a homogenous orange solution is obtained. The mixture is kept under stirring at 90°C for 96h, observing the formation of a white precipitate. It is then cooled to r.t. and left under stirring for 12h. The precipitate is recovered through filtration at low pressure on a funnel with a sintered-glass septum, by washing with a KOH _{(aq)} 30% solution and finally with Et2O. It is then dried at low pressure at 90°C. The yellow solid thus obtained is suspended into refluxed acetone (200ml) for 30 min, cooled to r.t. and filtered, thereby obtaining the product as a white solid, which is then dried at low pressure (45.79g, 0.1807mol, yield 61%, p.f.: 297-299 °C dec.)

1H NMR (500MHz, D2O) d [ppm]: 8.63 (s, 1H), 7.98 (d, J=8.3Hz, 1H), 7.88 (d, J=8.3Hz, 1H), 7.58 (t, J=6.8Hz, 1H), 7.44 (t, J=7.5Hz, 1H), 2.72 (t, J=7.9Hz, 2H), 1.68 (sex, J=7.7Hz, 2H), 0.94 (t, J=7.4Hz, 3H).

1-hydroxymethyl-3-propylquinoline 26 is preferably prepared in accordance with the procedure described below, still with reference to Figure 7.

In a 250ml two-necked flask equipped with CaCl2 valve, a suspension of 3-propylquinoline-4-carboxylate (10.00g, 39.47mmol) in 100ml of dry toluene is prepared. Anhydrous DMF (5.3ml) is added, and SOCl2 (18.78g, 157.9mmol) is dripped. The mixture is left under stirring at r.t. for 10min and is then heated to 55°C on a water bath for 1h, thereby obtaining a yellow solution. The mixture is cooled to r.t. and is poured into 200ml of aqueous solution of NaHCO3. The organic phase is collected, and the aqueous phase is extracted with additional 50ml of toluene. It is then backwashed with brine (100ml), dried over MgSO4, and evaporated at low pressure, thereby obtaining a yellow oil (6.94g, 29.7mmol).

The product is dissolved into THF (100ml) in a flask equipped with CaCl2 valve, and is then cooled to 5 °C with a water/ice bath. NaBH4 (3.93g, 104mmol) is added in portions to the mixture under stirring. The mixture is kept under stirring at 0-5°C for 1h10min and then at r.t. for 20min, thereby obtaining a yellow solution with white precipitate. The mixture is poured into 100ml of water and is carefully acidified by adding 150 ml of HCl(aq) 1M. The mixture is heated to a boil and distilled via THF. After 30min, the solution is cooled to r.t. and basified by adding Na2CO3, thus observing the formation of a pale yellow solid. 30ml of Et2O are added, and the mixture is kept under stirring for 12h. The solid is recovered by filtration and dried at low pressure at 40°C. The solid is dissolved into a refluxed 1:1 toluene/*n*-hexane mixture and hot-filtered; the filtrate is then allowed to cool to r.t., thus observing the crystallization of the desired product, which is recovered by filtration. The filtered liquid of the first filtration is extracted with 3×50 ml of CHCl3. The organic phase is dried over MgSO4 and evaporated at low pressure, thereby obtaining a yellow oil, which is recovered with a 1:1 toluene/*n*-hexane mixture. A total of 4.087g of white solid is obtained (20.31mmol, yield 51 %, p.f.: 96-97°C).

1H NMR (500MHz, CDCl3) d [ppm]: 8.51 (s, 1H), 8.28 (d, J=8.3Hz, 1H), 8.06 (d, J=8.0Hz, 1H), 7.64 (t, J=7.6Hz, 1H), 7.59 (t, J=7.0Hz, 1H), 2.80 (t, J=7.9Hz, 2H), 1.62 (m, 2H), 0.97 (t, J=7.3Hz, 3H).

3-propyl-4-formylquinoline 27 is preferably prepared in accordance with the procedure described below, still with reference to Figure 7.

In a 250ml flask equipped with CaCl2 valve, a solution of (3-propylquinoline-4-yl)methanol (3.800g, 18.88mmol) in dry CHCl3 (100ml) is prepared, and MnO2 (32.8g, 377mmol, Aldrich 63543) is added. The mixture is kept under vigorous stirring at r.t. for 25 h and is filtered on a sintered-glass funnel and then on paper in order to remove MnO2. The solvent is evaporated at low pressure at 40°C, thereby obtaining a pale yellow liquid (2.948g, 14.79mmol, yield 78%).

1HNMR (500MHz, CDCl3) d [ppm]: 10.92 (s, 1H), 8.90 (s, 1H), 8.71 (d, J=8.5Hz, 1H), 8.19 (d, J=8.3Hz, 1H), 7.75 (t, J=7.0Hz, 1H), 7.67 (t, J=7.0Hz, 1H), 3.09 (m, 2H), 1.75 (sex, J=7.4Hz, 2H), 1.04 (t, J=7.4Hz, 3H).

The derivative 28 is preferably prepared in accordance with the procedure described below, still with reference to Figure 7.

A solution of piperidine (40mg, 0.47mmol) in 0.6ml of MeOHA is added to a mixture of compound 6 (580mg, 2.06mmol) and 3-propylquinoline-4-carbaldehyde (463mg, 2.32mmol). The mixture is heated to reflux for 20 min, thereby obtaining a homogeneous red solution. This is then cooled to r.t. and the solvent is evaporated at low pressure, thereby obtaining a solid, which is declotted by sonication with acetone (2.5ml). The product is recovered as a yellow solid through filtration, by washing with acetone and then with Et2O. The product is purified by crystallization with iPrOH (511mg, 1.10mmol, yield 54%, p.f.: 200-201°C).

1H NMR (500MHz, DMSO-d6) d [ppm]: 8.95 (s, 1H), 8.91 (d, J=6.9Hz, 1H), 8.73 (d, J=8.6Hz, 1H), 8.65 (d, J=6.9Hz, 1H), 8.45 (d, J=8.2Hz, 1H), 8.34-8.30 (m, 2H), 8.14-8.10 (m, 2H), 7.92 (d, J=16.8Hz, 1H), 7.81 (t, J=8.3Hz, 1H), 7.79-7.65 (m, 2H), 4.87 (t, J=7.6Hz, 2H), 4.81 (t, J=4.8Hz, 1H), 3.51 (q, J=5.3Hz, 2H), 2.97 (t, J=8.0Hz, 2H), 2.15 (here, J=7.2Hz, 2H), 1.73 (sex, J=7.8Hz, 2H), 0.99 (t, J=7.3Hz, 3H); 13C NMR (125.7MHz, DMSO-d6) d [ppm]: 157.10, 153.18, 147.16, 140.78, 139.09, 138.08, 136.74, 136.37, 133.37, 131.89, 130.30, 130.15, 129.42, 128.46, 127.97, 127.90, 126.24, 125.91, 125.52, 125.47, 57.87, 56.86, 33.16, 33.03, 24.92, 14.55.

The derivative 29 is preferably prepared in accordance with the procedure described below, still with reference to Figure 7.

A suspension of derivative 29 (350mg, 0.755mmol), KPF6 (356mg, 1.933mmol) in 1.3ml of acetone is prepared and left under stirring at r.t. for 20min, thereby obtaining a white suspension. MeI (0.20ml, 3.21mmol, 0.46g) is added, and the mixture is heated in a CEM Discover microwave reactor for 40min (Pmax=10W, 95C, cooling off, 10ml closed vessel). The mixture is cooled to r.t.. The solid precipitate is ground, recovered by filtration, and washed with acetone and Et2O. The solid is suspended into 4ml of NH4PF6(aq) 30% and left under stirring for 3 days. The white solid is filtered at low pressure by washing with a few ml of NH4PF6 (aq) 30% and with deionized water. The product is dried at low pressure at 60°C for 4h. A total of 403mg of product is obtained (0.586mmol, yield 78%, p.f.: 193-195°C).

1H NMR (500MHz, DMSO-d6) d [ppm]: 9.64 (s, 1H), 8.90 (d, J=6.9Hz, 1H), 8.73 (d, J=8.6Hz, 1H), 8.69-8.67 (m, 2H), 8.59 (d, J=8.9Hz, 1H), 8.46 (d, J=8.2Hz, 1H), 8.35-8.30 (m, 2H), 8.16-8.09 (m, 3H), 7.81 (d, J=16.8Hz, 1H), 4.85 (t, J=7.5Hz, 2H), 4.72 (s, 3H), 3.50 (t, J=5.7Hz, 2H), 3.07 (t, J=7.9Hz, 2H), 2.15 (here, J=6.9Hz, 2H), 1.82 (sex, J=7.8Hz, 2H), 1.03 (t, J=7.3Hz, 3H).

The mixture of isomers 30 is preferably prepared according to the procedure described below, still with reference to Figure 7.

In a screw-cap tube, a suspension of 2 (98.5 mg, 0.344 mmol, 80:20 mixture of isomers), derivative 29 (230 mg, 0.334 mmol), dicyclohexylcarbodiimide (DCC) (75.8 mg, 0.367 mmol) and DMAP (3.5 mg, 0.029mmol) in 3 ml of dry Acetonitrile is prepared. Formation of a white precipitate is observed. The mixture is kept under stirring at r.t. for 44h and is filtered by washing the precipitate with Acetonitrile (20ml). The filtrate is collected and evaporated at low pressure, thereby obtaining an orange glassy solid, which is then sonicated with Et2O (20ml), thereby obtaining a pale orange powdery solid. The product is recovered by filtration and is then suspended into 15ml of EtOH and left under stirring for 72h in order to eliminate the residual DMAP. The mixture is filtered and dried at low pressure at 50°C, thereby obtaining an orange solid (253mg, 0.264mmol, yield 79%).

1HNMR(500MHz, DMSO-d6) d [ppm]: 9.65 (s, 1H (CH2-EDOT + ProDOT)), 8.89 (d, J=6.9Hz, 1H (CH2-EDOT + ProDOT)), 8.76 (d, J=8.7Hz, 1H (CH2-EDOT + ProDOT)), 8.68 (d, J=6.9Hz, 1H (CH2-EDOT + ProDOT)), 8.65 (d, J=8.6Hz, 1H (CH2-EDOT + ProDOT)), 8.59 (d, J=8.9Hz, 1H (CH2-EDOT + ProDOT)), 8.46 (d, J=8.2Hz, 1H (CH2-EDOT + ProDOT)), 8.36-8.29 (m, 2H (CH2-EDOT + ProDOT)), 8.14 (t, J=8.0Hz, 1H (CH2-EDOT + ProDOT)), 8.11-8.08 (m, 2H (CH2-EDOT + ProDOT)), 7.79 (d, J=16.7Hz, 1H (CH2-EDOT + ProDOT)), 6.81 (s, 2H ProDOT), 6.61 (m, 2H CH2-EDOT), 5.12 (m, 1H ProDOT), 4.81 (t, J=7.6Hz, 2H (CH2-EDOT + ProDOT)), 4.71 (s, 3H (CH2-EDOT + ProDOT)), 4.42-4.40 (m, 1H CH2-EDOT), 4.30-4.24 (m, 2H CH2-EDOT + 4H ProDOT), 4.15-4.08 (m, 1H CH2-EDOT + 2H (CH2-EDOT + ProDOT)), 4.03-3.99 (m, 1H CH2-EDOT), 3.05 (t, J=8.0Hz, 2H (CH2-EDOT +ProDOT)), 2.30-2.26 (m, 4H (CH2-EDOT + ProDOT)), 2.12-2.09 (m, 2H (CH2-EDOT + ProDOT)), 1.79 (sex, J=7.9Hz, 2H (CH2-EDOT + ProDOT), 1.63-1.59 (m, 2H (CH2-EDOT + ProDOT)), 1.01 (t, J=7.3Hz, 3H (CH2-EDOT + ProDOT)).

### Example 6

The following will describe an explanatory and non-limiting example of *in situ* oxidative polymerization of the mixture of polymerogenic monomers 9.

A polymeric electrochromic film was obtained by *in situ* oxidative polymerization on a support of polyethylenetherephtalate (PET) with a thin layer of indium tin oxide (ITO) acting as a transparent and conducting oxide.

More in detail, the process *of in situ* oxidative polymerization must be carried out as follows:
In a glass vessel, the mixture of isomers 9 (50 mg), nitromethane, propylene carbonate and DOWANOL PM (1-methoxy-2-propanol) are weighed in this order. The mixture is stirred, thereby obtaining a clear green solution. A mixture of BAYTRON-CB-40 and PEG-ran-PPG (prepared as indicated below) is added at room temperature; after stirring, a clear orange solution is obtained. The solution is heated to 70°C on a bain-marie for 5 minutes.

The solution takes a green colour. It is left at room temperature for 4h and is then deposited by spin coating onto suitable clean substrates, e.g. 2x2cm substrates made of FTO glass (glass coated with Fluorine Doped Tin Oxide), or 2x2cm or 4x4cm substrates made of ITO PET (Polyester coated with Indium Tin Oxide). Preferably, "spin" deposition takes place as follows: (deposition at 0rpm, 30s at 600rpm, 10s at 1200 rpm). The substrates are kept at room temperature for 5 minutes, and then they are placed into an oven at 115°C for 30 min. The substrates are allowed to cool to room temperature, then they are washed with ethanol and dried with a flow of compressed air.

Mixture of BAYTRON-CB-40 and PEG-ran-PPG: the solution of BAYTRON-CB-40 and PEG-ran-PPG (Mw 12000, Sigma-Aldrich 438200) is prepared by mixing 7.930g of BAYTRON-CB-40 and 0.784 g of PEGran-PPG. The mixture is stirred vigourously for 5 minutes. The final solution contains 36% of Fe(OTs)3 and 9% of PEG-ran-PPG.

In general, the compounds according to the invention are polymerogenic monomers, and their conducting polymers show high electrochromic contrast, high transmissivity, absence of colour in the oxidized state and neutral colour in the reduced state. In this regard, still by way of example only, experimental data relating to the characterization of a polymer obtained by starting from the mixture of monomers 1 will be described.

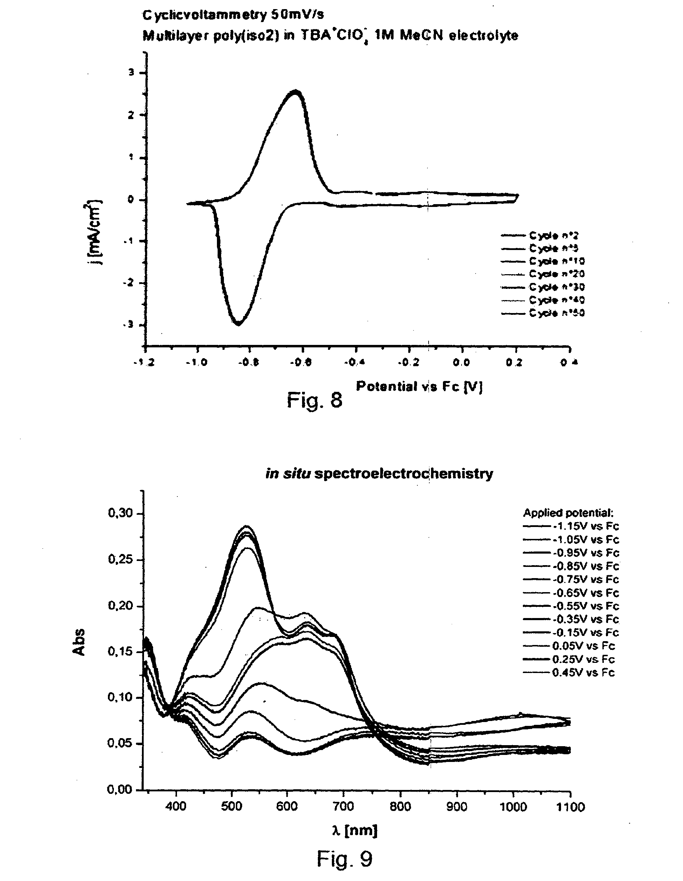

Figure 8 exemplifies the repeated cyclic voltammetries of the polymer obtained through chemical polymerization of the mixture 1 obtained in accordance with the protocol described in example 1 and polymerized in accordance with the protocol described in example 3.

Figure 9 exemplifies the spectroelectrochemical characterization of the polymer obtained through chemical polymerization of the mixture 1 obtained in accordance with the protocol described in example 1 and polymerized in accordance with the protocol described in example 3.

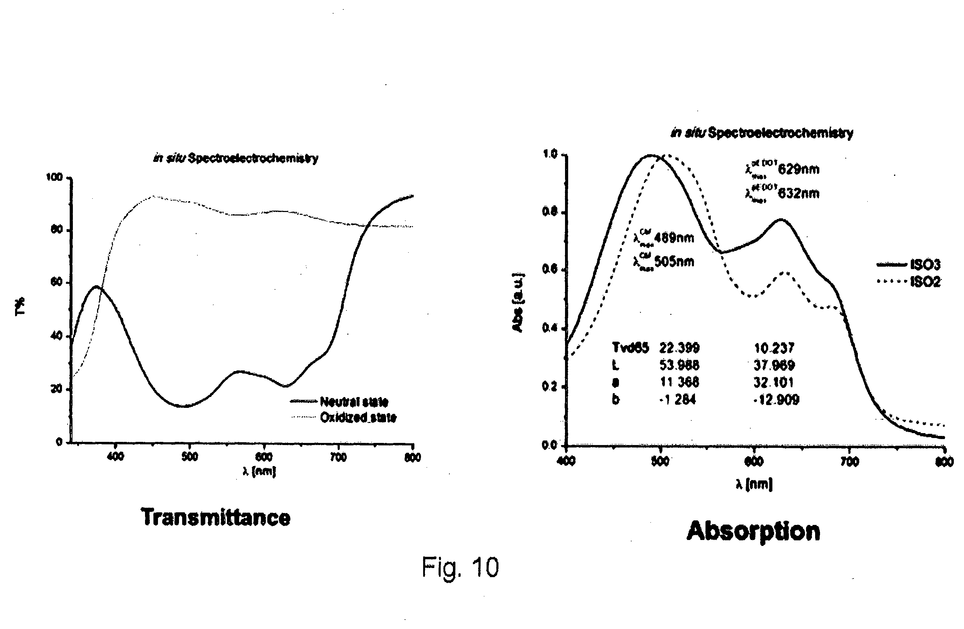

Figure 10 exemplifies the spectroelectrochemical characterization of the polymer obtained through chemical polymerization of the mixture 9 obtained in accordance with the protocol described in example 2 and polymerized in accordance with the protocol described in example 3.

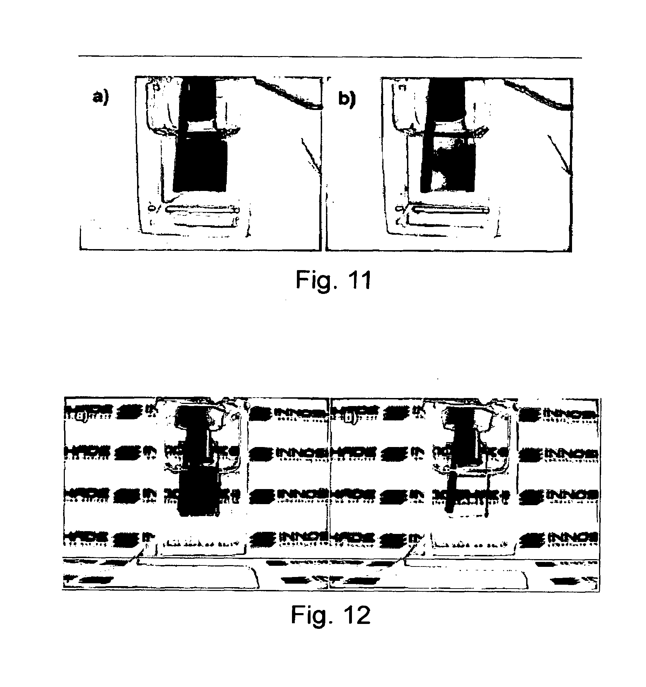

Figure 11 exemplifies an electrochemical cell containing the electrochromic film obtained through oxidative polymerization of the mixture 1 as described in example 6, wherein reference a) corresponds to a "Reduced state" and reference b) corresponds to an "Oxidized state".

Figure 12 exemplifies an electrochemical cell containing the electrochromic film obtained through oxidative polymerization of the mixture 9 as described in example 6, wherein reference a) corresponds to a "Reduced state" and reference b) corresponds to an "Oxidized state".

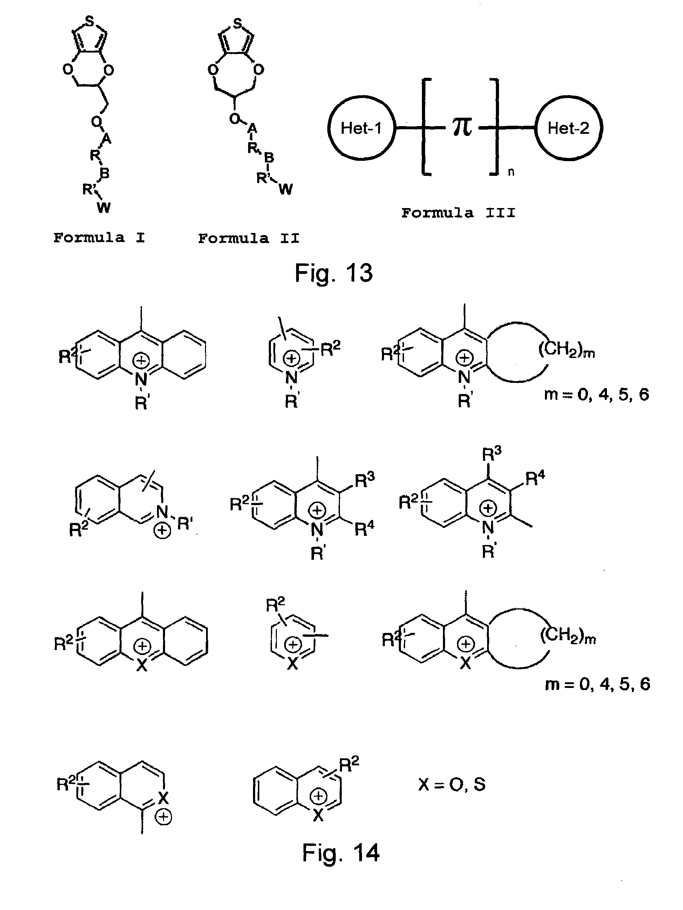

Figure 13 shows compounds having the formulae (I), (II) and (III), as already described and identified herein.

Figure 14 shows heterocyclic groups which may be used in compounds according to the present invention, as already described and identified herein.

It is apparent that those skilled in the art may devise variants of the above-described examples without however departing from the protection scope of the present invention as defined by the appended claims.

## Claims

1. A monomer of general formula (I) or (II), 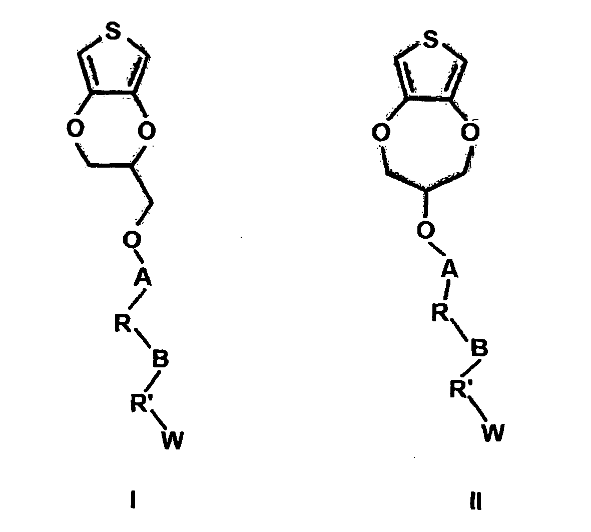 wherein A and B, independently of each other, are functional groups selected among the following:
- C=O, -C=S, -O(C=O), -O(C=S), -O(C=O)O, -(C=O)O,
- (C=S)O, -(C=S)S, -(C=O)N, -(C=S)N, -SO, -SO₂, or, alternatively, any linear alkylic chain or branched alkylic chain or glycolic chain;
wherein R and R', independently of each other, are linear alkylic chains or branched alkylic chains or glycolic chains;
wherein W is a monodisperse electrochromic derivative of general formula (III): 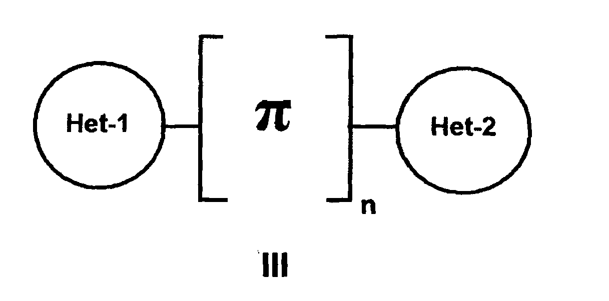 wherein Het-1 and Het-2, independently of each other, are heterocyclic groups selected among the following: 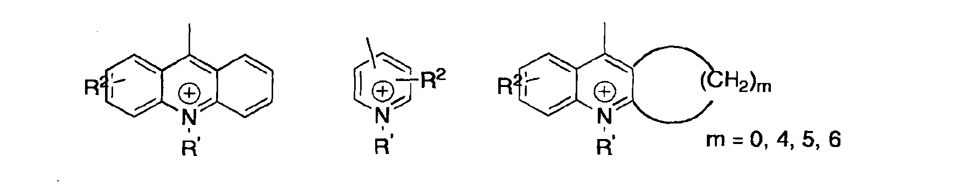 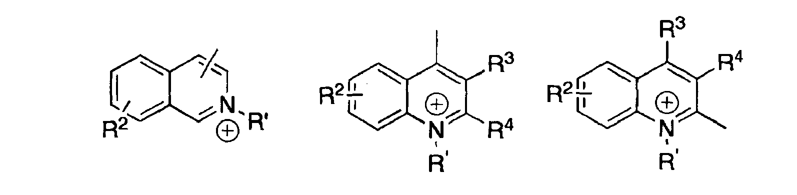 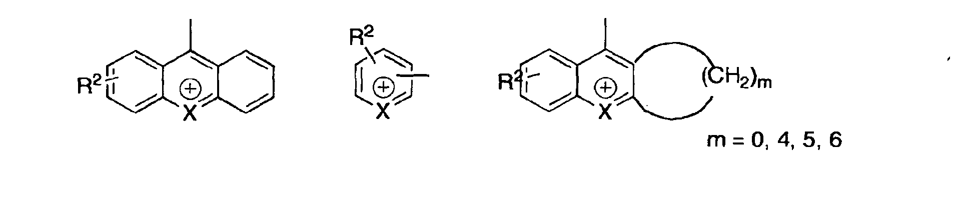 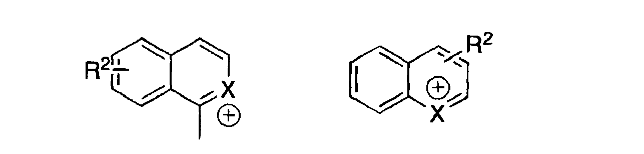 and wherein π represents one of the following: a double bond, a triple bond, or a plurality of double or triple bonds conjugated in a number n, n being equal to 2 or 3;
X represents one of the following elements: O, S, Se;
wherein R' is defined as stated above;
wherein R², R³ and R⁴ are substituents;
and wherein m is equal to 0, 4, 5 or 6.

2. A monomer according to claim 1, wherein said substituents R², R³ and R⁴, independently of each other, are selected among the following: H, methyl, branched or linear alkylic chain, halogens, esters and amides, alkylic and arylic nitriles, nitro derivatives, sulfones and sulfoxides, perfluoroalkyl, alcoxies, dialkylamino, diarylamino, phenyl, 1-naphthyl, 2-naphthyl.

3. A monomer according to claim 1 or 2, wherein each one of said chains R and R', independently of each other, comprises 1 to 16 atoms of carbon, and wherein π comprises a benzenic ring or a thiophenic ring.

4. A mixture of monomers, **characterized in that** said monomers are monomers according to one of claims 1 to 3, and that said mixture comprises compounds in a molar ratio I:II between compounds of said general formula (I) and compounds of said general formula (II), wherein said molar ratio I:II is equal to M:(100-M), wherein the value of M is between 60 and 99 inclusive.

5. Use of monomers or mixtures of monomers according to one of claims 1 to 4, for polymerizing electrochromic polymers.

6. A polymer, **characterized in that** it is obtained by polymerization of monomers according to one of claims 1 to 4.

7. A polymer according to claim 6, **characterized in that** it exhibits electrochromic properties.

8. A polymer according to claim 6 or 7, wherein said polymerization is an oxidative chemical polymerization of monomers.

9. A polymer according to claim 6 or 7, wherein said polymerization is an electrochemical polymerization of monomers.

10. A polymer according to claim 6 or 7, wherein said polymerization is an in situ oxidative polymerization of monomers.

11. Use of a polymer according to claim 7, for manufacturing of electrochromic goods.

12. An electrochromic panel, **characterized in that** it comprises polymers according to one of claims 6 to 10.

13. An ophthalmic lens, **characterized in that** it comprises polymers according to one of claims 6 to 10, preferably so arranged as to form an electrochromic layer.

## Patentansprüche

1. Monomer der allgemeinen Formel (I) oder (II), 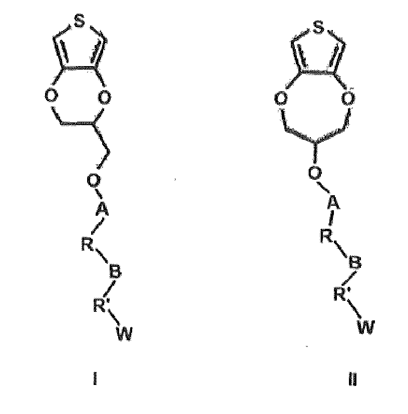 worin A und B, jeweils unabhängig voneinander, funktionale Gruppen ausgewählt aus den Folgenden sind:
- C=O, -C=S, -O(C=O), -O(C=S), -O(C=O)O, -(C=O)O, -(C=S)O, -(C=S)S, -(C=O)N, -(C=S)N, - SO, -SO₂, oder, alternativ, eine lineare Alkylkette oder verzweigte Alkylkette oder Glycolkette;
worin R und R', jeweils unabhängig voneinander, lineare Alkylketten oder verzweigte Alkylketten oder Glycolketten sind;
worin W ein monodisperses elektrochromes Derivat der allgemeinen Formel (III) ist: 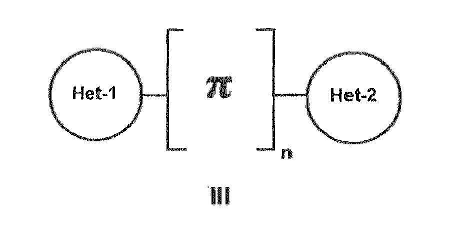 worin Het-1 und Het-2, jeweils unabhängig voneinander, heterocyclische Gruppen ausgewählt aus den Folgenden sind: 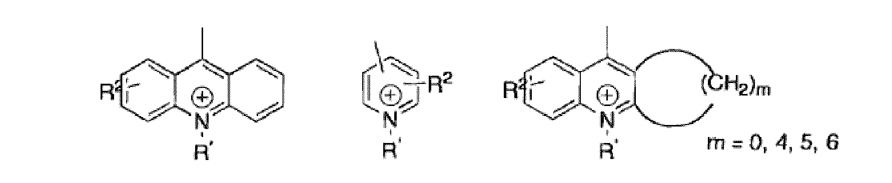 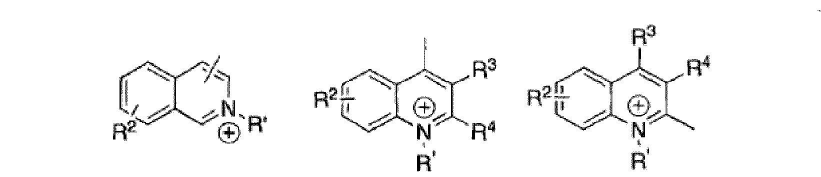 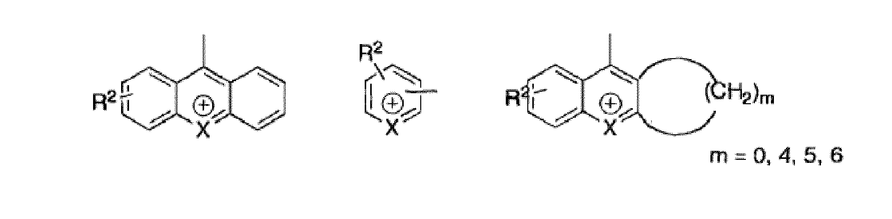 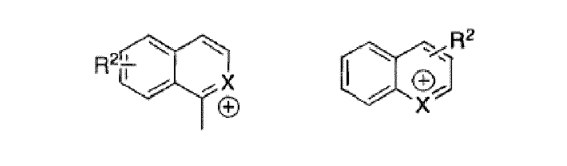 und worin π eins der folgenden darstellt: eine Doppelbindung, eine Dreifachbindung, oder eine Mehrzahl von Doppelbindungen oder Dreifachbindungen konjugiert in einer Anzahl n, wobei n gleich 2 oder 3 ist;
X eines der folgenden Elemente darstellt: O, S, Se;
worin R' wie oben angegeben definiert ist;
worin R², R³ und R⁴ Substituenten sind;
und worin m gleich 0, 4, 5 oder 6 ist.

2. Monomer nach Anspruch 1, worin die Substituenten R², R³ und R⁴, jeweils unabhängig voneinander, ausgewählt sind aus den Folgenden: H, Methyl, verzweigte oder lineare Alkylketten, Halogene, Ester und Amide, alkylische und arylische Nitrile, Nitro-Derivate, Sulfone und Sulfoxide, Perfluoroalkyl, Alkoxy, Dialkylamino, Diarylamino, Phenyl, 1-Naphthyl, 2-Naphthyl.

3. Monomer nach Anspruch 1 oder 2, worin jede der Ketten R und R', jeweils unabhängig voneinander, 1 bis 16 Kohlenstoffatome umfasst und worin π einen Benzolring oder einen Thiophenring umfasst.

4. Mischung von Monomeren, **dadurch gekennzeichnet, dass** die Monomere Monomere nach einem der Ansprüche 1 bis 3 sind, und dass die Mischung Verbindungen mit einem molaren Verhältnis I:II zwischen Verbindungen der allgemeinen Formel (I) und Verbindungen der allgemeinen Formel (II) umfasst, worin das molare Verhältnis I:II gleich M:(100-M) ist, worin der Wert von M zwischen einschließlich 60 und 99 liegt.

5. Verwendung von Monomeren oder Mischungen von Monomeren nach einem der Ansprüche 1 bis 4, zum Polymerisieren von elektrochromen Polymeren.

6. Polymer, **dadurch gekennzeichnet, dass** es durch Polymerisation von Monomeren nach einem der Ansprüche 1 bis 4 erhalten wird.

7. Polymer nach Anspruch 6, **dadurch gekennzeichnet, dass** es elektrochrome Eigenschaften aufweist.

8. Polymer nach Anspruch 6 oder 7, worin die genannte Polymerisation eine oxidative chemische Polymerisation von Monomeren ist.

9. Polymer nach Anspruch 6 oder 7, worin die genannte Polymerisation eine elektrochemische Polymerisation von Monomeren ist.

10. Polymer nach Anspruch 6 oder 7, worin die genannte Polymerisation eine in situ oxidative Polymerisation von Monomeren ist.

11. Verwendung eines Polymers nach Anspruch 7, zum Herstellen von elektrochromen Gütern.

12. Elektrochromes Paneel, **dadurch gekennzeichnet, dass** es Polymere nach einem der Ansprüche 6 bis 10 umfasst.

13. Ophthalmie-Linse, **dadurch gekennzeichnet, dass** sie Polymere nach einem der Ansprüche 6 bis 10 umfasst, vorzugsweise so angeordnet, dass eine elektrochrome Schicht gebildet wird.

## Revendications

1. Monomère de formule générale (I) ou (II), 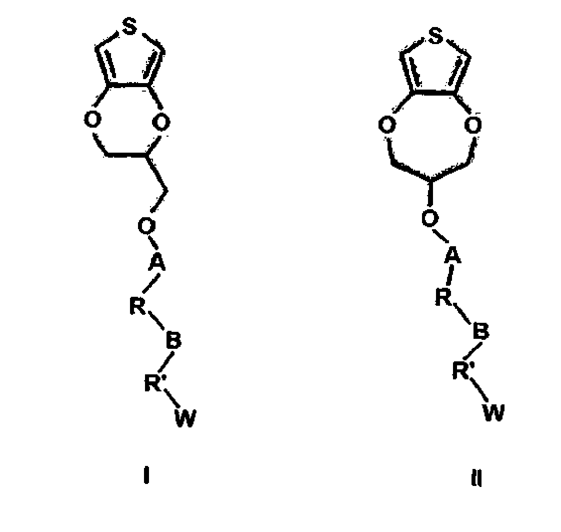 dans lesquelles A et B sont, indépendamment l'un de l'autre, des groupes fonctionnels choisis parmi les suivantes :
- C=O, -C=S, -O(C=O), -O(C=S), -O(C=O)O, -(C=O)O,
- (C=S)O, -(C=S)S, -(C=O)N, -(C=S)N, -SO, -SO₂, ou en variante, toute chaîne alkylique linéaire ou chaîne alkylique ramifiée ou chaîne glycolique ;
dans lesquelles R et R' sont, indépendamment l'un de l'autre, des chaînes alkyliques linéaires ou des chaînes alkyliques ramifiées ou des chaînes glycoliques ;
dans lesquelles W est un dérivé électrochromique monodispersé de formule générale (III) : 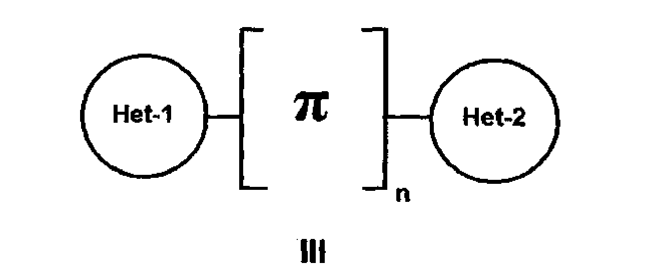 dans laquelle Het-1 et Het-2 sont, indépendamment l'un de l'autre, des groupes hétérocycliques choisis parmi les suivants : 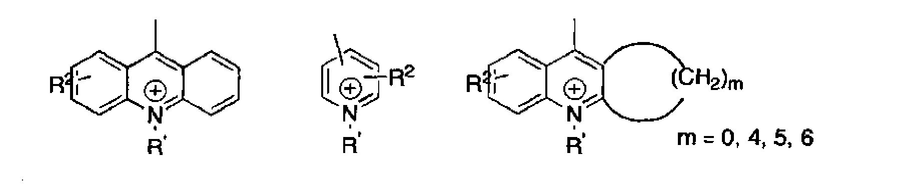 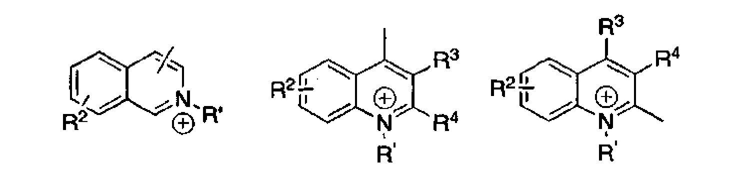 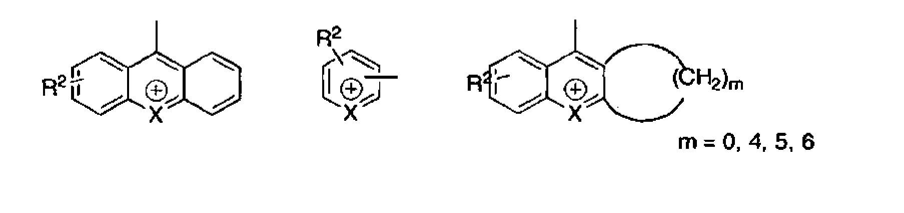 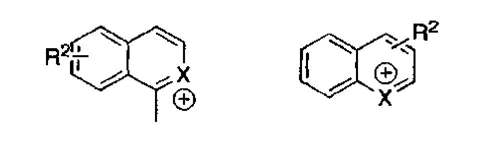 et dans laquelle π représente l'un des éléments suivants : une double liaison, une triple liaison, ou une pluralité de doubles ou de triples liaisons conjuguées au nombre de n, n étant égal à 2 ou 3 ;
X représente l'un des éléments suivants : 0, S, Se ;
dans lesquelles R' est défini comme énoncé ci-dessus ;
dans lesquelles R², R³ et R⁴ sont des substituants ;
et dans lesquelles m est égal à 0, 4, 5 ou 6.

2. Monomère selon la revendication 1, dans lequel lesdits substituants R², R³ et R⁴ sont, indépendamment les uns des autres, choisis parmi les suivants : H, méthyle, chaîne alkylique ramifiée ou linéaire, halogènes, esters et amides, nitriles d'alkyle et d'aryle, dérivés nitrés, sulfones et sulfoxydes, perfluoroalkyle, alcoxys, dialkylamino, diarylamino, phényle, 1-naphtyle, 2-naphtyle.

3. Monomère selon la revendication 1 ou 2, dans lequel chacune desdites chaînes R et R', comprend indépendamment les unes des autres, 1 à 16 atomes de carbone, et dans lequel π comprend un cycle benzénique et un cycle thiophénique.

4. Mélange de monomères, **caractérisé en ce que** lesdits monomères sont des monomères selon l'une des revendications 1 à 3, et **en ce que** ledit mélange comprend les composés dans un rapport molaire I : II entre les composés de ladite formule générale (I) et les composés de ladite formule générale (II), dans lequel ledit rapport molaire I : II est égal à M : (100 - M), dans lequel la valeur de M se situe entre 60 et 99 inclus.

5. Utilisation de monomères ou de mélanges de monomères selon l'une des revendications 1 à 4, pour polymériser des polymères électrochromiques.

6. Polymère, **caractérisé en ce qu'**il est obtenu par polymérisation de monomères selon l'une des revendications 1 à 4.

7. Polymère selon la revendication 6, **caractérisé en ce qu'**il présente des propriétés électrochromiques.

8. Polymère selon la revendication 6 ou 7, dans lequel ladite polymérisation est une polymérisation chimique oxydative de monomères.

9. Polymère selon la revendication 6 ou 7, dans lequel ladite polymérisation est une polymérisation électrochimique de monomères.

10. Polymère selon la revendication 6 ou 7, dans lequel ladite polymérisation est une polymérisation oxydative *in situ* de monomères.

11. Utilisation d'un polymère selon la revendication 7, pour la fabrication de produits électrochromiques.

12. Panneau électrochromique, **caractérisé en ce qu'**il comprend des polymères selon l'une des revendications 6 à 10.

13. Verre ophtalmique, **caractérisé en ce qu'**il comprend des polymères selon l'une des revendications 6 à 10, de préférence agencés de façon à former une couche électrochromique.
